# EUROPÄISCHE PATENTANMELDUNG

(11) **EP 3 266 593 A1**
(43) Veröffentlichungstag der Anmeldung: **10.01.2018**
(21) Anmeldenummer: 16178655.3
(22) Anmeldetag: 08.07.2016
(51) Int. Cl.: B29C 67/00, B33Y 10/00, B33Y 30/00, B33Y 70/00

(54) **VERFAHREN ZUR HERSTELLUNG DUROPLASTISCHER DREIDIMENSIONALER STRUKTUREN**

(71) Anmelder: Lehmann & Voss & Co. KG, 20354 Hamburg (DE)
(72) Erfinder: RECHBERGER, Marcus Dr., 22359 Hamburg (DE); PFICHNER, Christian, 21077 Hamburg (DE); HANNING, Hermann, 32758 Detmold (DE); SCHÜMCHEN, Kurt Prof. Dr., 53949 Dahlem (DE)
(74) Vertreter: Von Rohr Patentanwälte Partnerschaft mbB

(57) **Zusammenfassung**

Gegenstand der Erfindung ist ein Verfahren zur Herstellung dreidimensionaler Strukturen auf Basis duroplastischer Materialien.

## Beschreibung

Die vorliegende Erfindung betrifft das technische Gebiet der generativen Fertigungsverfahren. Insbesondere betrifft die vorliegende Erfindung ein Verfahren zur Herstellung dreidimensionaler Strukturen auf Basis duroplastischer Materialien.

Weiterhin betrifft die vorliegende Erfindung eine Vorrichtung zur Herstellung dreidimensionaler Strukturen auf Basis duroplastischer Materialien mittels Lasersinterns.

Schließlich betrifft die vorliegende Erfindung eine Zusammensetzung zur Herstellung duroplastischer Materialien mittels Lasersintern.

Generative Fertigungsverfahren, welche auch unter den Bezeichnungen additive Fertigung bzw. Additive Manufacturing bekannt sind, sind Verfahren zur schichtweisen Fertigung von Kunststoffbauteilen. Die Fertigung erfolgt üblicherweise aus Pulvern, Flüssigkeiten oder Filamenten, mittels chemischer oder physikalischer Prozesse.

Die generativen Fertigungsverfahren waren früher auch unter den Begriffen Rapid Prototyping oder 3D-Druck bekannt, im Laufe der Zeit wurden die Verfahren jedoch so differenziert, dass Rapid Prototyping oder 3D-Druck nur noch spezielle Verfahrensarten und nicht mehr die gesamte Gattung bezeichnen. Zu den bekanntesten generativen Fertigungsverfahren gehören die Stereolithografie, das selektive Laserschmelzen (SLM), das selektive Lasersintern (SLS) und das Binder Jetting. Während bei der Stereolithographie aus Flüssigkeiten durch Belichtung mit UV-Strahlung schichtweise ein dreidimensionales Objekt aufgebaut wird, handelt es sich bei den anderen Verfahren um Pulverbettverfahren, bei welchen zumindest einer der Ausgangsstoffe in Form eines Pulvers vorgelegt wird. Beim Binder Jetting wird das Pulvermaterial mittels eines flüssigen Bindemittels durch chemische Reaktion verfestigt, wohingegen beim selektiven Laserschmelzen oder bei der selektiven Lasersinterung aus einem Pulver schichtweise ein dreidimensionales Objekt durch Eintragung von Energie, insbesondere durch Laserstrahlung, erzeugt wird.

Insbesondere das vor ca. 20 Jahren als Rapid Prototyping-Verfahren zur schnellen Herstellung von Gegenständen auf Basis thermoplastischer Polymere entwickelte selektive Lasersintern (SLS) eignet sich aufgrund der Verwendung pulverförmiger Ausgangsmaterialien und der mittlerweile sehr ausgereiften Lasertechnologie potentiell in hervorragender Weise als generatives Fertigungsverfahren für eine breite Anwendung. Allerdings zeigten sich bei der technischen Umsetzung des selektiven Lasersinterns (SLS) eine Reihe von Problemen und Restriktionen, welche dazu führten, dass das Selektive Lasersintern trotz seines Potentials bis heute nicht für die Massenfertigung eingesetzt wird:
So wurden zwar bereits früh thermoplastische Polyamide, insbesondere Polyamid-12, als geeignete thermoplastische Polymere für das selektive Lasersintern identifiziert und eingesetzt, allerdings führen die beim Lasersintern erforderlichen hohen Temperaturen im Bauraum zu einer starken Alterung bzw. Schädigung der Pulver und so zu einem übermäßigen Verbrauch von nicht gesinterten Pulver. Die erforderliche exakte Temperaturführung ist technisch schwer zu realisieren und wird üblicherweise nicht überwacht. Aus dieser inhomogenen Temperaturführung resultieren stark schwankende Produktqualitäten, die im Rahmen der industriellen Fertigung nicht akzeptabel sind. Die exakte Temperaturführung wird umso aufwändiger, je höher die Schmelztemperaturen der Polymere sind, weshalb sich das beispielsweise das selektive Lasersintern von PEEK-Polymer nicht am Markt durchsetzt, da die Schädigung der Polymerpulver auf diesem Temperaturniveau nochmals deutlich stärker ausfällt.

Wie zuvor ausgeführt, wird beim selektiven Lasersintern ein Bauteil schichtweise aus einem Polymerpulver erzeugt, indem eine Schicht des Polymerpulvers vorgelegt und selektiv, insbesondere ortsaufgelöst, Laserstrahlung ausgesetzt wird. Hierbei werden die thermoplastischen Polymere aufgeschmolzen und versintern streng lokal begrenzt im Bereich des Energieeintrags. Anschließend wird eine weitere Schicht Pulver auf die erste Schicht aufgetragen und wiederum ortsselektiv Energie mittels eines Lasers eingetragen, so dass Schicht für Schicht schließlich eine dreidimensionale Struktur bzw. ein dreidimensionaler Gegenstand aufgebaut wird.

Bei der Verwendung der üblichen thermoplastischen Materialien wird das sogenannte Baufeld, d. h. die Ebene, in welchem das Polymerpulver in Form eines Pulverbettes vorgelegt wird und welche der Laserstrahlung ausgesetzt ist, auf Temperaturen knapp unterhalb des Schmelzpunktes des Polymers - zumeist etwa 8 bis 10 °C unterhalb des Schmelzpunktes - erwärmt und anschließend mittels Laserstrahlung aufgeschmolzen. Die genaue Einhaltung eines Temperaturfensters knapp unterhalb des Schmelzpunktes des Polymers ist jedoch nur schwierig zu gewährleisten und macht die Steuerung des Verfahrens zusätzlich aufwendig und kompliziert.

Darüber hinaus können gerade bei Verwendung thermoplastischer Materialien die im Bauteil während des Herstellungsprozesses auftretenden Temperaturgradienten zu Verformungen oder anderen Materialschwächen führen, welche die Anwendbarkeit des Verfahrens weiter beschränken.

Die nur eingeschränkt mögliche Regelung der Temperatur führt auch zu einer fehlenden Überwachung und Qualitätskontrolle des Bauprozesses, da Laser und Scanner zwar üblicherweise digital arbeiten, die Temperaturregelung und insbesondere die Temperaturverteilung nur sehr aufwendig und indirekt zu überwachen sind. Solange ein Prozess jedoch nicht als Ganzes qualifiziert werden kann, kann er nicht effektiv in eine Prozesskette integriert werden.

Ein weiterer Nachteil der selektiven Lasersinterung ist die Beschränkung auf thermoplastische Materialien, da diese auf eine begrenzte Auswahl an Anwendungszwecken und Geometrien der hergestellten Gegenstände beschränkt sind. Die Verwendung reaktiver Komponenten, welche durch Energieeintragung zu Materialien mit einer Vielzahl von gezielt einstellbaren Eigenschaften reagieren, könnte die Anwendung generativer Fertigungsverfahren, insbesondere des selektiven Lasersinterns, auf neue technische Gebiete ausdehnen und die Fertigung neuartiger Strukturen ermöglichen. Aus dem Stand der Technik sind eine Vielzahl generativer Fertigungsverfahren bekannt, mit welchen sich dreidimensionale Objekte durch Eintragung von Energie herstellen lassen, jedoch bezieht sich keines dieser Verfahren auf die Eintragung von Energie, insbesondere von Laserenergie, in ein Pulverbett, um neue Materialien und somit auch neue Anwendungsmöglichkeiten für generative Fertigungsverfahren zur Verfügung zu stellen.

So ist beispielsweise die Herstellung duroplastischer Objekte mittels mindestens einer flüssigen reaktiven Komponente bekannt. In diesen Fertigungsverfahren werden duroplastische Stoffe als Ergebnis eines generativen Fertigungsverfahrens erhalten, wobei eine partikelförmige Komponente in einem Pulverbett vorgelegt und mit einer flüssigen reaktiven Komponente entweder allein durch chemische Reaktion oder durch photochemisch initiierte Reaktion vernetzt wird. Derartige Systeme sind beispielsweise in der WO 2014/152531 A1, der WO 2015/100243 A1 sowie der US 2005/0080191 A1 beschrieben. Die vorgenannten Verfahren nutzen das Prinzip des sogenannten Binder Jettings, bei welchem das Bindemittel bzw. eine reaktive Komponente ortsselektiv auf ein Pulverbett gedruckt wird und anschließend das Pulver mit der reaktiven Komponente reagiert.

Darüber hinaus werden im Stand der Technik beispielsweise hochgefüllte Systeme beschrieben, um Formkörper herzustellen. Hierbei handelt es sich um Pulvermischungen, welche einen sehr hohen Anteil von zumeist über 90 Gew.-% an Füllstoffen, beispielsweise Siliciumdioxid oder Metallpulver, aufweisen. Die Füllstoffe sind mit einer geringen Menge eines reaktiven Harzes versehen, welches durch Eintragung von Energie vernetzt wird, wodurch der Grünling eines Formkörpers erhalten wird. Üblicherweise werden diese Grünlinge anschließend gesintert, wobei das Polymer entfernt und der zumeist metallische oder mineralische Formkörper erhalten wird. Ein derartiges System wird in der WO 95/32824 A1 beschrieben.

Schließlich ist aus dem Stand der Technik auch bekannt, poröse Formkörper aus thermoplastischen Materialien mittels selektiven Lasersinters herzustellen und den porösen Formkörper anschließend mit einem duroplastischen Polymer zu infiltrieren, um dem Formkörper verbesserte mechanische Eigenschaften zu verleihen. Ein derartiges System wird beispielsweise in der WO 97/13601 A1 beschrieben.

Keines der vorgenannten Systeme kann jedoch ein verbessertes Material zur Herstellung kunststoffbasierter Strukturen oder Gegenstände durch selektives Lasersintern bereitstellen, welches eine breite und wirtschaftlich sinnvolle Anwendung des selektiven Lasersinterns ermöglichen würde.

Es ist folglich eine Aufgabe der vorliegenden Erfindung darin zu sehen, die zuvor geschilderten, in Verbindung mit dem Stand der Technik auftretenden Probleme zu vermeiden oder zumindest abzuschwächen.

Eine weitere Aufgabe der vorliegenden Erfindung ist darin zu sehen, ein Verfahren bereitzustellen, welches die Konstruktion neuartiger Bauteile auf Basis neuer Materialien mit pulverförmigen Ausgangsstoffen ermöglicht.

Eine weitere Aufgabe der vorliegenden Erfindung ist darin zu sehen, ein Material bereitzustellen, welches sich zur Verwendung in selektiven Lasersinterverfahren eignet und dessen Eigenschaften auf die jeweiligen Anwendungserfordernisse speziell zugeschnitten und abgestimmt werden kann.

Eine weitere Aufgabe der vorliegenden Erfindung ist darin zu sehen, ein Material bereitzustellen, welches neue Anwendungsmöglichkeiten für generative Fertigungsverfahren ermöglicht und insbesondere die Konstruktion neuartiger Bauteile möglich macht.

Gegenstand der vorliegenden Erfindung gemäß einem ersten Aspekt der vorliegenden Erfindung ist somit ein Verfahren zur Herstellung duroplastischer dreidimensionaler Strukturen gemäß Anspruch 1; weitere vorteilhafte Ausgestaltungen dieses Erfindungsaspekts sind Gegenstand der diesbezüglichen Unteransprüche.

Weiterer Gegenstand der vorliegenden Erfindung gemäß einem zweiten Aspekt der vorliegenden Erfindung ist eine Vorrichtung zur Herstellung duroplastischer dreidimensionaler Strukturen nach Anspruch 12.

Wiederum weiterer Gegenstand der vorliegenden Erfindung gemäß einem dritten Aspekt der vorliegenden Erfindung ist die Verwendung einer eine Vorrichtung zur Herstellung duroplastischer dreidimensionaler Strukturen nach Anspruch 13.

Weiterer Gegenstand der vorliegenden Erfindung ist eine Zusammensetzung nach Anspruch 14; weitere vorteilhafte Ausgestaltungen dieses Erfindungsaspekts sind Gegenstand der diesbezüglichen Unteransprüche.

Schließlich ist wiederum weiterer Gegenstand der vorliegenden Erfindung die Verwendung einer Zusammensetzung nach Anspruch 20.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf. Weiterhin versteht es sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren, dies versteht sich jedoch von selbst.

Dies vorausgeschickt wird im Folgenden die vorliegende Erfindung näher beschrieben.

Gegenstand der vorliegenden Erfindung ist somit - gemäß einem **ersten** Aspekt der vorliegenden Erfindung - ein Verfahren zur Herstellung dreidimensionaler Strukturen, insbesondere eines dreidimensionalen Gegenstandes, auf Basis duroplastischer Materialien, wobei
(a) in einem ersten Verfahrensschritt mindestens eine pulverförmige Zusammensetzung, enthaltend mindestens eine reaktive Komponente, bereitgestellt wird, und
(b) in einem nachfolgenden Verfahrensschritt die reaktive Komponente durch Eintragung von Energie zur Reaktion gebracht, insbesondere vernetzt, wird.

Im Rahmen des erfindungsgemäßen Verfahrens wird durch die Reaktion, insbesondere die Vernetzung, der reaktiven Komponente vorzugsweise eine duroplastische dreidimensionale Struktur, insbesondere ein Gegenstand, erhalten.

Wie die Anmelderin in überraschender Weise herausgefunden hat, lassen sich auch aus pulverförmigen Ausgangsmaterialien durch Eintragung von Energie, insbesondere durch Laserbestrahlung, Gegenstände oder Bauteile auf Basis duroplastischer Materialien erhalten.

Während bislang lediglich thermoplastische Ausgangsmaterialien für Lasersinterverfahren verwendet wurden, eröffnet das erfindungsgemäße Verfahren nunmehr die Möglichkeit, duroplastische Materialien mittels ortsaufgelöster Energieeintragungen, insbesondere mittels Lasersintern, herzustellen. Hierdurch werden vollkommen neue Materialien und Bauteile der generativen Fertigung, insbesondere dem selektiven Lasersintern, zugänglich.

Insbesondere sind Werkstücke aus duroplastischen Materialien in der Regel sehr viel beständiger, d. h. sowohl mechanisch als chemisch widerstandsfähiger, als vergleichbare thermoplastische Materialien. Durch die Reaktion der reaktiven Komponente während des erfindungsgemäßen Verfahrens wird ein neues Material erhalten, welches spezifisch an die jeweiligen Anwendungserfordernisse angepasst werden kann. Das erfindungsgemäße Verfahren öffnet somit neuartige Einsatzmöglichkeiten sowie eine sehr viel größere Auswahl an Edukten für generative Fertigungsverfahren, insbesondere das selektive Lasersintern, wobei gleichzeitig auch eine Vielzahl neuartiger Materialien zugänglich wird.

Zwar ist die Herstellung von duroplastischen Materialien aus pulverförmigen Ausgangsstoffen bekannt, jedoch bislang auf die Anwendung in Pulverlacken beschränkt. Es gibt Pulverlacke, welche durch thermische Anregung bzw. Photoinitiierung zu einem duroplastischen Material reagieren, jedoch bedecken die Pulverlacke ein Substrat üblicherweise vollflächig und weisen eine nur zweidimensionale Ausdehnung auf. Im Rahmen der vorliegenden Erfindung werden jedoch dreidimensionale Strukturen, insbesondere Bauteile oder Gegenstände, bereitgestellt.

Insbesondere ermöglicht das erfindungsgemäße Verfahren die Herstellung von Bauteilen mit definiert einstellbaren mechanischen Eigenschaften, insbesondere von hart-spröde bis zäh-elastisch. Im Unterschied zu thermoplastischen Materialien zeigen die mit dem erfindungsgemäßen Verfahren hergestellten Bauteile bis zu ihrer thermischen Zersetzung keinen Abfall der mechanischen Eigenschaften unter Wärmebelastung.

Darüber hinaus kann beispielsweise bei der Durchführung des erfindungsgemäßen Verfahrens als Lasersinterverfahren auch auf die technisch problematische Erwärmung des Pulvers verzichtet werden. Die reaktive Komponente kann vielmehr unmittelbar bei Umgebungstemperatur durch den Laserstrahl ortsaufgelöst und lokal begrenzt zur Reaktion gebracht und versintert werden.

Weiterhin ist es auch möglich, mit dem erfindungsgemäßen Verfahren die Zusammensetzung selektiv so weit zu vernetzen, dass stabile Grünlinge der Bauteile erhalten werden. In einem späteren Temperprozess kann das Bauteil dann vollständig ausgehärtet, d. h. vernetzt, werden.

Unter einem Duroplast ist im Rahmen der vorliegenden Erfindung ein Polymerwerkstoff zu verstehen, welcher über chemische Bindungen dreidimensional fest vernetzt ist. Duroplaste sind üblicherweise harte Polymerwerkstoffe ohne Eigenfärbung, welche aufgrund ihrer Vernetzung nicht aufgeschmolzen werden können, sondern bei thermischer Belastung nach Überschreiten der Zersetzungstemperatur zersetzt werden. Zu den bekanntesten Duroplasten zählen u. a. Epoxidharze, Aminoplaste sowie Phenoplaste.

Im Gegensatz zu den Duroplasten weisen Thermoplaste keine oder nur wenige Vernetzungen auf. In Thermoplasten liegen somit isolierte Polymermoleküle bzw. - ketten vor, welche über Dipol-Dipol- und/oder van-der-Waals-Wechselwirkungen miteinander verbunden sind. Thermoplaste lassen sich in einem bestimmten Temperaturbereich verformen, wobei dieser Vorgang reversibel ist.

Was nun die reaktive Komponente angelangt, so ist diese üblicherweise im Rahmen der vorliegenden Erfindung ausgewählt aus reaktiven Monomeren, reaktiven Oligomeren, reaktiven Polymeren und deren Mischungen. Insbesondere wird es im Rahmen der vorliegenden Erfindung bevorzugt, wenn die reaktive Substanz ausgewählt ist aus reaktiven Oligomeren und/oder reaktiven Polymeren, sowie deren Mischungen.

Unter einer reaktiven Komponente wird im Rahmen der vorliegenden Erfindung eine chemische Verbindung oder eine Mischung von chemischen Verbindungen mit reaktiven chemischen, d. h. funktionellen Gruppen verstanden, welche mit anderen reaktiven chemischen Gruppen unter den jeweiligen Verfahrensbedingungen reagieren können. Beispiele für geeignete reaktive chemische Gruppen sind beispielsweise Carbonylgruppen, Säurefunktionen, ungesättigte Kohlenstoffbindungen, Amine, Hydroxygruppen, Expoxygruppen etc., welche mit anderen funktionellen Gruppen eine chemische Reaktion eingehen können.

Im Rahmen der vorliegenden Erfindung ist es bevorzugt, wenn die Vernetzung der reaktiven Komponente durch Addition und nicht durch Kondensation, insbesondere durch Polyaddition und nicht durch Polykondensation, erfolgt, da bei der (Poly-)Addition keine niedermolekularen Verbindungen abgespalten werden, welche aus dem Polymer entfernt werden müssen bzw. aus diesem heraus migrieren können.

Unter einem Polymer ist im Rahmen dieser Erfindung ein chemischer Stoff, insbesondere ein Werkstoff, zu verstehen, welcher aus Makromolekülen besteht. Die Makromoleküle sind aus einer oder mehreren sich wiederholenden Struktureinheiten aufgebaut und besitzen üblicherweise Molekulargewichte von über 10.000 g/mol. Im Rahmen der vorliegenden Erfindung können sowohl Homopolymere als auch Copolymere oder Polymerblends eingesetzt werden.

Im Gegensatz zu Polymeren bestehen Oligomere nur aus einer geringen Anzahl an Wiederholeinheiten, üblicherweise zwischen 10 und 100 Wiederholungseinheiten, und weisen im Allgemeinen Molekulargewichte von weniger als 10.000 g/mol auf.

Im Rahmen der vorliegenden Erfindung hat es sich als vorteilhaft erwiesen, wenn die Zusammensetzung in Form eines rieselfähigen Pulvers bereitgestellt wird und/oder wenn die Zusammensetzung in Form eines Pulverbetts bereitgestellt wird. Ein rieselfähiges Pulver hat den Vorteil, dass während der Durchführung des Verfahrens stets neue Schichten der Zusammensetzung in homogener Verteilung und dünner Schichtstärke auf das Baufeld aufgetragen werden können, wobei insbesondere durch Bereitstellung eines Pulverbetts eine sehr ebene Oberfläche, welche gleichmäßig bestrahlt werden kann, gewährleistet werden kann.

Im Rahmen der vorliegenden Erfindung ist darüber hinaus üblicherweise vorgesehen, dass der Energieeintrag mittels elektromagnetischer Strahlung erfolgt. Durch die elektromagnetische Strahlung kann entweder thermische Energie zugeführt werden oder es wird elektromagnetische Strahlungen definierter, d. h. spezifischer, Wellenlängen zur Initiierung photochemischer Reaktionen eingestrahlt.

Im Rahmen der vorliegenden Erfindung ist es im Allgemeinen vorgesehen, dass die Energie als thermische Energie, insbesondere in Form von Laserstrahlung, eingetragen wird. Im Rahmen der vorliegenden Erfindung wird somit üblicherweise die Reaktion, insbesondere die Vernetzung, der reaktiven Komponente thermisch induziert, das heißt, die Wellenlänge der eingebrachten elektromagnetischen Strahlung ist von eher geringerer Bedeutung.

Im Rahmen der vorliegenden Erfindung sind somit sämtliche Arten von Laser geeignet, welche genügend Energie in die Zusammensetzung eintragen, um eine thermische Reaktion der reaktiven Komponente hervorzurufen. Die seitens der Zusammensetzung aufgenommene Energiemenge ist dabei von der Leistung der Laserquelle sowie der Absorptionsfähigkeit der Zusammensetzung für die Laserstrahlung abhängig. Im Rahmen der vorliegenden Erfindung können beispielsweise CO₂-Laser mit einer Wellenlänge von 10,6 µm oder auch Festkörperlaser, wie Nd:YAG, verwendet werden.

Wie zuvor beschrieben, kann es jedoch auch vorgesehen sein, dass die Energie als elektromagnetische Strahlung spezifischer Wellenlänge, insbesondere im Ultraviolettbereich (UV-Bereich) oder im Infrarotbereich (IR-Bereich), eingetragen wird. Die Einstrahlung von elektromagnetische Strahlung spezifischer Wellenlänge wird insbesondere bei Verwendung von Photoinitiatoren, welche die chemische Vernetzung nach Aktivierung durch elektromagnetische Strahlung spezifischer Wellenlänge starten, angewandt. Eine derartige photochemische Initiierung der chemischen Vernetzung läuft üblicherweise sehr viel schneller ab als eine thermische Initierung der Reaktion.

Gemäß einer bevorzugten Ausführungsform der vorliegenden Erfindung ist das erfindungsgemäße Verfahren ein Lasersinterverfahren, insbesondere ein Verfahren zur selektiven Lasersinterung. Die Verfahren zur Herstellung kunststoffbasierter Bauteile mittels Lasersinterung, insbesondere selektiver Lasersinterung, waren bislang lediglich thermoplastischen Ausgangsmaterialien, insbesondere Polyamid-12, vorbehalten. Mit dem erfindungsgemäßen Verfahren ist es nunmehr jedoch möglich, auch polymere Werkstoffe auf Basis duroplastischer Materialien zu erhalten und zu dreidimensionalen Strukturen, insbesondere Bauteilen oder Gegenständen zu verarbeiten.

Im Rahmen der vorliegenden Erfindung ist es vorgesehen, dass der Energieeintrag örtlich und zeitlich begrenzt, insbesondere regioselektiv, durchgeführt wird. Der Energieeintrag erfolgt somit ortsaufgelöst. Im Rahmen der vorliegenden Erfindung wird vorzugsweise die Zusammensetzung nur an definierten Stellen bzw. in definierten Bereichen erwärmt, so dass selektiv eine Reaktion bzw. Versinterung in genau definierten Bereichen der Zusammensetzung stattfindet. Es hat sich in den Versuchen der Anmelderin gezeigt, dass eine Versinterung des Pulvers, d. h. eine Vernetzung, der reaktiven Komponente selektiv an den der Energieeintragung, insbesondere Laserstrahlung, ausgesetzten Bereichen möglich ist. In anderen Bereichen wird die Aktivierungsenergie für eine Reaktion der reaktiven Komponente nicht aufgebracht, so dass durch den Energieeintrag, insbesondere die Energieeinstrahlung, vorzugsweise Laserstrahlung, scharf begrenzte definierte Bereiche aus duroplastischem Material geschaffen werden. Die Auflösungsschärfe der Bereiche ist dabei allein durch die Querschnittsfläche des Laserstrahls begrenzt. Gleiche Ergebnisse können auch bei ortsselektiver Bestrahlung mit UV- oder IR-Strahlung erhalten werden.

Was nun die Energie anbelangt, mit welcher der Energieeintrag erfolgt, so kann dieser naturgemäß in weiten Bereichen in Abhängigkeit von den jeweils eingesetzten Ausgangsmaterialien variieren. Es hat sich jedoch bewährt, wenn durch den Energieeintrag eine Energie pro Fläche von 0,01 bis 500 J/mm², insbesondere 0,1 bis 350 J/mm², vorzugsweise 1 bis 300 J/mm², bevorzugt 2 bis 250 J/mm², besonders bevorzugt 3 bis 200 J/mm², ganz besonders bevorzugt 4 bis 150 J/mm², insbesondere bevorzugt 5 bis 125 J/mm², eingetragen, insbesondere in die Zusammensetzung, eingetragen wird.

Im Rahmen der vorliegenden Erfindung wird durch die Durchführung der Verfahrensschritte (a) und (b) üblicherweise eine Lage eines einer dreidimensionalen Struktur, insbesondere eines dreidimensionalen Gegenstandes oder eines Bauteils, erzeugt.

Unter einer dreidimensionalen Struktur ist dabei im Rahmen der vorliegenden Erfindung eine Struktur zu verstehen, welche eine Ausdehnung in alle Raumrichtungen aufweist.

Eine Lage der dreidimensionalen Struktur, insbesondere des dreidimensionalen Gegenstandes oder des Bauteils, entspricht dabei der Schichtdicke der pulverförmigen Zusammensetzung nach Bestrahlung. Die Lage entspricht somit einem Schnitt durch den Gegenstand oder das Bauteil mit einer definierten Schichtstärke.

Im Rahmen der vorliegenden Erfindung ist dabei üblicherweise vorgesehen, dass die Lage eine Schichtstärke im Bereich von 0,005 bis 1 mm, insbesondere 0,01 bis 0,8 mm, vorzugsweise 0,02 bis 0,5 mm, bevorzugt 0,02 bis 0,20 mm, besonders bevorzugt 0,04 bis 0,15 mm, ganz besonders bevorzugt 0,06 bis 0,12 mm, aufweist.

Im Allgemeinen werden die Verfahrensschritte (a) und (b) wiederholt, um eine dreidimensionale Struktur, insbesondere einen dreidimensionalen Gegenstand, zu erhalten. Das heißt im Rahmen der vorliegenden Erfindung wird wie für generative Fertigungsverfahren, insbesondere die selektive Lasersinterung, üblich, ein dreidimensionaler Gegenstand, insbesondere ein Bauteil, schichtweise aufgebaut.

Üblicherweise erfolgt der Energieeintrag im Rahmen des erfindungsgemäßen Verfahrens in einer Ebene, insbesondere in einer xy-Ebene. Unter einer xy-Ebene ist im Rahmen der vorliegenden Erfindung eine üblicherweise horizontale, das heißt waagerechte, Ebene zu verstehen. Im Rahmen der vorliegenden Erfindung ist es bevorzugt, wenn die pulverförmige Zusammensetzung in Form eines Pulverbetts mit einer ebenen Oberfläche in einer xy-Ebene vorliegt, da auf diese Weise ein besonders gleichmäßiger Schichtaufbau des Gegenstandes und ein gleichmäßiger Energieeintrag erzielt werden können. Der zuvor beschriebene Aufbau wird insbesondere gewählt, wenn das Verfahren diskontinuierlich betrieben wird.

Im Rahmen der vorliegenden Erfindung kann es jedoch auch vorgesehen sein, dass die Ebene des Energieeintrags, insbesondere des Pulverbetts, geneigt ist, insbesondere für den Fall, dass das erfindungsgemäße Verfahren kontinuierlich betrieben wird, beispielsweise in Form einer Prozessstraße.

Darüber hinaus ist im Rahmen der vorliegenden Erfindung üblicherweise vorgesehen, dass durch wiederholte Durchführungen der Verfahrensschritte (a) und (b) senkrecht zu der Ebene des Energieeintrags oder senkrecht zur Ebene der Oberfläche der Zusammensetzung, insbesondere des Pulverbetts, insbesondere in einer z-Richtung, die einzelnen Lagen der dreidimensionalen Struktur, insbesondere des dreidimensionalen Gegenstands, erzeugt werden. Insbesondere hat sich bei den Versuchen der Anmelderin gezeigt, dass es möglich ist, durch geeignete Auswahl von Energieeintrag und Schichtdicke der pulverförmigen Zusammensetzung eine Vernetzung nicht nur innerhalb der xy-Ebene, das heißt einer Lage der dreidimensionalen Struktur, sondern auch in z-Richtung zu erhalten, und zwar derart, dass entweder stabile Grünlinge erhalten werden, welche anschließend getempert werden, oder fertige Bauteile bzw. Gegenstände. Eine z-Richtung entspricht üblicherweise einer vertikalen Richtung, welche insbesondere auf der xy-Ebene senkrecht steht.

Im Rahmen der vorliegenden Erfindung kann es gemäß einer bevorzugten Ausführungsform vorgesehen sein, dass Verfahrensschritt (b) in einer Schutzgasatmosphäre und/oder unter Unterdruck durchgeführt wird. Insbesondere kann durch diese Verfahrensführung ausgeschlossen werden, dass Bestandteile der Zusammensetzung in unerwünschter Weise mit Sauerstoff reagieren, was die chemischen und mechanischen Eigenschaften des Bauteils negativ beeinflussen würde. Darüber hinaus können so auch sehr oxidationsempfindliche Ausgangsmaterialien eingesetzt werden.

Falls das erfindungsgemäße Verfahren in einer Schutzgasatmosphere durchgeführt wird, so hat es sich bewährt, wenn Verfahrensschritt (b) in einer Edelgasatmosphäre, insbesondere in einer Argonatmosphäre, oder einer Stickstoffatmosphäre durchgeführt wird.

In diesem Zusammenhang werden besonders gute Ergebnisse erhalten, wenn der Sauerstoffgehalt der Schutzatmosphäre weniger als 15 Vol.-%, insbesondere weniger als 10 Vol.-%, vorzugsweise weniger als 7 Vol.-%, bezogen auf die Schutzgasatmosphäre, beträgt. Gleichermaßen kann es vorgesehen sein, dass die Schutzgasatmosphäre einen Sauerstoffgehalt von 0,01 bis 15 Vol.-%, insbesondere 0,1 bis 10 Vol.-%, vorzugsweise 0,1 bis 7 Vol.-%, bezogen auf die Schutzgasatmosphäre, aufweist.

Falls Verfahrensschritt (b) des erfindungsgemäßen Verfahrens unter Unterdruck durchgeführt wird, so werden besonders gute Ergebnisse erhalten, wenn Verfahrensschritt (b) bei einem Druck von weniger als 100 mbar, insbesondere weniger als 50 mbar, vorzugsweise weniger als 20 mbar, durchgeführt wird. Gleichermaßen kann es vorgesehen, dass Verfahrensschritt (b) bei einem Druck von 0,01 bis 100 mbar, insbesondere 0,05 bis 50 mbar, vorzugsweise 0,1 bis 20 mbar, durchgeführt wird.

Was nun die Temperaturen anbelangt, bei welchen Verfahrensschritt (b) durchgeführt wird, so können diese gleichermaßen in weiten Bereichen variieren. Üblicherweise wird Verfahrensschritt (b) jedoch bei Temperaturen unterhalb von 60 °C, insbesondere 50 °C, vorzugsweise 40 °C, durchgeführt.

Gleichermaßen werden besonders gute Ergebnisse erhalten, wenn Verfahrensschritt (b) bei Temperaturen im Bereich von 10 bis 60 °C, insbesondere 20 bis 50 °C, vorzugsweise 30 bis 40 °C, durchgeführt werden.

Im Rahmen der vorliegenden Erfindung ist somit eine strikte Einhaltung genau definierter Temperaturbereiche, nämlich kurz unterhalb des Schmelzpunktes der eingesetzten Polymere, wie dies für thermoplastische Ausgangsmaterialien zwingend ist, üblicherweise nicht notwendig. Das erfindungsgemäße Verfahren kann prinzipiell bei Raumtemperatur durchgeführt werden, ohne dass es zu einem Verzug oder einer Verformung der hergestellten Strukturen kommt. Es kann jedoch im Rahmen der vorliegenden Erfindung auch vorgesehen sein, spezielle Temperaturbereiche der pulverförmigen Zusammensetzung oder des Baufeldes, insbesondere der pulverförmigen Zusammensetzung, in Verfahrensschritt (b) einzustellen, um die jeweilige Schicht vorzuvernetzen und beispielsweise als Stützmaterial für die duroplastisch zu vernetzenden Bereiche zu verwenden.

Gemäß einer bevorzugten Ausführungsform der vorliegenden Erfindung wird in einem auf den Verfahrensschritt (b) folgenden Verfahrensschritt (c) die dreidimensionale Struktur, insbesondere der dreidimensionale Gegenstand, getempert. Der Verfahrensschritt (c) wird insbesondere dann durchgeführt, wenn durch wiederholtes Ausführen der Verfahrensschritt (a) und (b) die gewünschte dreidimensionale Struktur, insbesondere der Gegenstand, erhalten wird. Wie zuvor bereits ausgeführt, kann es sein, dass die dreidimensionale Struktur bzw. der Gegenstand in Form eines Grünlings vorliegt, welcher noch nicht vollständig ausgehärtet, das heißt vernetzt ist. Durch das Tempern wird die endgültige Vernetzung - nicht nur innerhalb der einzelnen Lagen der dreidimensionalen Struktur, sondern auch zwischen den einzelnen Lagen - erzielt, so dass eine homogene Struktur, insbesondere ein homogenes Bauteil erhalten wird. Insbesondere wird durch das Tempern das Material mit seinen endgültigen Eigenschaften erhalten. Beim Tempern wird die aus den Verfahrensschritten (a) und (b) erhaltene dreidimensionale Struktur üblicherweise auf ein bestimmtes Temperaturniveau erwärmt, um die gewünschte Nachvernetzung zu erzielen.

Im Rahmen der vorliegenden Erfindung ist es üblicherweise vorgesehen, dass in Verfahrensschritt (c) die Temperatur der dreidimensionalen Struktur auf Werte im Bereich von 50 bis 220 °C, insbesondere 70 bis 190 °C, vorzugsweise 100 bis 180 °C, bevorzugt 120 bis 160 °C, besonders bevorzugt 140 bis 160 °C, eingestellt wird. Bei den zuvor genannten Temperaturbereichen wird im Allgemeinen eine gleichmäßige Nachvernetzung erzielt.

Im Rahmen der vorliegenden Erfindung kann es gleichfalls vorgesehen, dass in Verfahrensschritt (c) die Temperatur der dreidimensionalen Struktur auf Werte unterhalb von 220 °C, insbesondere 190 °C, vorzugsweise 180 °C, bevorzugt 160 °C, eingestellt wird.

Üblicherweise wird im Rahmen der vorliegenden Erfindung in Verfahrensschritt (c) die Temperatur in 1 bis 50 Verfahrensstufen, insbesondere 2 bis 40 Verfahrensstufen, vorzugsweise 5 bis 30 Verfahrensstufen, bevorzugt 10 bis 20 Verfahrensstufen, eingestellt. Weiterhin kann es vorgesehen sein, dass in Verfahrensschritt (c) die Temperatur in mindestens einer Verfahrensstufe, insbesondere mindestens 2 Verfahrensstufen, vorzugsweise mindestens 5 Verfahrensstufen, bevorzugt mindestens 10 Verfahrensstufen, eingestellt wird.

Bei der stufenweisen Einstellung der Temperatur wird die Zieltemperatur des Temperns nicht durch kontinuierliches Aufheizen erreicht, sondern es wird ein erstes Temperaturniveau einer ersten Verfahrensstufe vorgegeben und erst wenn sich das Bauteil auf dieses Temperaturniveau erwärmt hat, wird die Temperatur auf eine zweite Verfahrensstufe erhöht. So erfolgt eine besonders gleichmäßige und schonende Erwärmung der dreidimensionalen Struktur, ohne dass thermische Spannungen im Material auftreten. Im Rahmen der vorliegenden Erfindung ist es im Allgemeinen vorgesehen, dass die Temperatur in Verfahrensschritt (c) je Verfahrensstufe um 0,5 bis 220 °C, insbesondere 1 bis 100 °C, vorzugsweise 5 bis 50 °C, bevorzugt 8 bis 30 °C, besonders bevorzugt 10 bis 20 °C, geändert wird.

Gleichermaßen kann es in diesem Zusammenhang vorgesehen sein, dass die Temperatur in Verfahrensschritt (c) je Verfahrensstufe um mindestens 0,5 °C, insbesondere mindestens 1 °C, vorzugsweise mindestens 2 °C, bevorzugt mindestens 3 °C, besonders bevorzugt mindestens 5 °C, geändert wird.

Weiterhin kann es im Rahmen der vorliegenden Erfindung vorgesehen sein, dass in Verfahrensschritt (c) die dreidimensionale Struktur, insbesondere der Gegenstand, von Partikeln umgeben ist, insbesondere in Partikel eingebettet ist. Die Einbettung der in den Verfahrensschritten (a) und (b) erhaltenen dreidimensionalen Strukturen, insbesondere Gegenstände, in ein Partikelbett erfolgt, um eine Verformung der Struktur während des Temperprozesses zu vermeiden. Darüber hinaus können durch die Auswahl geeigneter Partikel auch die Oberflächeneigenschaften, insbesondere die Erhabenheit der Oberfläche, der dreidimensionalen Struktur beeinflusst werden.

Wenn im Rahmen der vorliegenden Erfindung in Verfahrensschritt (c) die dreidimensionale Struktur von Partikeln umgeben ist, so hat es sich bewährt, wenn die Partikel sphärisch ausgebildet sind und/oder wenn die Partikel einen Durchmesser im Bereich von 5 bis 500 µm, insbesondere 10 bis 400 µm, vorzugsweise 20 bis 300 µm, bevorzugt 50 bis 250 µm, besonders bevorzugt 80 bis 200 µm, ganz besonders bevorzugt 90 bis 150 µm, aufweisen. Partikel mit den zuvor genannten Partikelgrößen eignen sich in hervorragender Weise zur Stützung der durch das erfindungsgemäße Verfahren erhaltenen dreidimensionalen Struktur und wirken einer Deformation der dreidimensionalen Struktur während des Temperns entgegen.

Üblicherweise sind die Partikel Keramik- und/oder Glasperlen, wobei insbesondere der Einsatz von Glasperlen bevorzugt ist. Es ist jedoch auch möglich, beispielsweise Partikel auf Basis von Metallen einzusetzen.

Gemäß einer bevorzugten Ausführungsform der vorliegenden Erfindung wird Verfahrensschritt (c) in einer Schutzgasatmosphäre und/oder unter Unterdruck durchgeführt. Eine Schutzgasatmosphäre ist vorteilhaft, um zu verhindern, dass die dreidimensionale Struktur unbeabsichtigt oxidiert wird bzw. verbrennt. Auch ein Durchführung von Verfahrensschritt (c) unter Unterdruck ist vorteilhaft, um eventuell im Grünling vorhandene Gase herauszulösen und somit die Dichte der dreidimensionalen Struktur während des Tempervorgangs weiter zu erhöhen.

Falls Verfahrensschritt (c) in einer Schutzgasatmosphäre durchgeführt wird, so hat es sich auch im Zusammenhang mit Verfahrensschritt (c) bewährt, wenn Verfahrensschritt (c) in einer Edelgasatmosphäre, insbesondere einer Argonatmosphäre, oder einer Stickstoffatmosphäre durchgeführt wird.

Insbesondere wird die Schutzgasatmosphäre vorteilhafterweise derart eingestellt, dass der Sauerstoffgehalt der Schutzgasatmosphäre weniger als 15 Vol.-%, insbesondere weniger als 10 Vol.-%, vorzugsweise weniger als 7 Vol.-%, bezogen auf die Schutzgasatmosphäre, beträgt. Gleichermaßen kann es vorgesehen sein, dass die Schutzgasatmosphäre in Verfahrensschritt (c) einen Sauerstoffgehalt von 0,01 bis 15 Vol.-%, insbesondere 0,1 bis 10 Vol.-%, vorzugsweise 0,1 bis 7 Vol.-%, bezogen auf die Schutzgasatmosphäre, aufweist.

Falls Verfahrensschritt (c) unter Unterdruck durchgeführt wird, so werden gute Ergebnisse erhalten, wenn Verfahrensschritt (c) bei einem Druck von weniger als 100 mbar, insbesondere weniger als 50 mbar, vorzugsweise weniger als 20 mbar, durchgeführt wird. In diesem Zusammenhang kann es jedoch auch vorgesehen sein, dass Verfahrensschritt (c) bei einem Druck von 0,01 bis 100 mbar, insbesondere 0,05 bis 50 mbar, vorzugsweise 0,1 bis 20 mbar, durchgeführt wird.

Gegenstand der vorliegenden Erfindung gemäß einer bevorzugten Ausführungsform der vorliegenden Erfindung ist somit ein Verfahren zur Herstellung dreidimensionaler Strukturen, insbesondere eines dreidimensionalen Gegenstandes, auf Basis duroplastischer Materialien, insbesondere wie zuvor geschildert, wobei
(a) in einem ersten Verfahrensschritt mindestens eine reaktive Komponente bereitgestellt wird,
(b) in einem nachfolgenden Verfahrensschritt die reaktive Komponente durch Eintragung von Energie zur Reaktion gebracht, insbesondere vernetzt, wird und
(c) in einem wiederum nachfolgenden Verfahrensschritt (c) die dreidimensionale Struktur getempert wird.

Auch gemäß dieser Ausführungsform ist es vorteilhafterweise vorgesehen, dass die Verfahrensschritte (a) und (b) so oft wiederholt werden, bis die gewünschte dreidimensionale Struktur, insbesondere der Gegenstand, zumindest in Form eines Grünlings erhalten ist.

Im Rahmen der vorliegenden Erfindung kann es allgemein vorgesehen sein, dass nach Verfahrensschritt (a) und vor Verfahrensschritt (b) eine Vorvernetzung der Zusammensetzung durchgeführt wird. Unter einer Vorvernetzung ist im Rahmen der vorliegenden Erfindung ein Angelieren der Zusammensetzung zu verstehen, bei welche die Partikel der Zusammensetzung erwärmt und angeschmolzen werden, so dass sie aneinander haften, ohne dass jedoch eine Vernetzung durch chemische Reaktion stattfindet.

Gemäß einer bevorzugten Ausführungsform betrifft die vorliegende Erfindung somit ein Verfahren zur Herstellung dreidimensionaler Strukturen, insbesondere eines dreidimensionalen Gegenstandes, auf Basis duroplastischer Materialien, wobei
(A) in einem ersten Verfahrensschritt mindestens eine Zusammensetzung, enthaltend mindestens eine reaktive Komponente, bereitgestellt wird, insbesondere in Form einer Ebene bereitgestellt wird,
(B) in einem nachfolgenden Verfahrensschritt eine Vorvernetzung der Zusammensetzung durchgeführt wird und
(C) in einem wiederum nachfolgenden Verfahrensschritt die reaktive Komponente durch Eintragung von Energie zur Reaktion gebracht, insbesondere vernetzt, wird.

Verfahrensschritt (A) entspricht dem zuvor geschilderten Verfahrensschritt (a), während Verfahrensschritt (C) dem zuvor geschilderten Verfahrensschritt (b) entspricht.

Eine Vorvernetzung der Zusammensetzung ist im Rahmen der vorliegenden Erfindung nicht zwingend notwendig, kann jedoch vorteilhaft sein, wenn beispielsweise die Viskositätseigenschaften der Zusammensetzung während des Lasersinterns bzw. der Bestrahlung mit elektromagnetischer Strahlung nicht derart eingestellt werden können, dass ein streng begrenztes, d. h. definiertes Bauteil erhalten werden kann. In diesem Fall ist eine Vorvernetzung der Zusammensetzung von Vorteil.

Im Rahmen der vorliegenden Erfindung ist es gemäß dieser Ausführungsform üblicherweise vorgesehen, dass die Vorvernetzung lokal und/oder zeitlich begrenzt, insbesondere regioselektiv, durchgeführt wird.

Insbesondere kann es im Rahmen der vorliegenden Erfindung vorgesehen sein, dass durch die Vorvernetzung vorvernetzte Bereiche, insbesondere in Form von Flächen und/oder Linien, bevorzugt Gitterlinien, vorzugsweise ein Gitternetz, in der Zusammensetzung erzeugt werden. Dieses Linien bzw. das Gitternetz bilden ein Hilfsgitter bzw. eine Stützstruktur für den Aufbau der eigentlichen dreidimensionalen Struktur durch die Reaktion während des selektiven Lasersinterns. Insbesondere kann durch das Hilfsgitter die flüssige Reaktionsmischung während des eigentlichen Lasersintervorgangs fixiert werden, so dass selbst bei ungünstiger Viskosität der geschmolzenen Zusammensetzung ein klar definiertes und begrenztes Bauteil bzw. eine dreidimensionalen Struktur mit scharfen Konturen erhalten wird.

Die Vorvernetzung erfolgt vorzugsweise gemäß dem klassischen selektiven Lasersinterverfahren, d. h. thermoplastische Materialien werden aufgeschmolzen und verbinden sich in der Schmelze miteinander, wobei dieser Vorgang reversibel ist und keine Vernetzung durch chemische Reaktion stattfindet. Insbesondere ist bei der Durchführung der Vorvernetzung darauf zu achten, dass die Reaktionstemperatur für die Reaktion der reaktiven Komponente nicht erreicht wird.

Die Stützstruktur bzw. das Hilfsgitter wird nach Durchführung des erfindungsgemäßen Verfahrens und Erhalt der dreidimensionalen Struktur, insbesondere des Gegenstandes, im Allgemeinen mechanisch entfernt. Dies ist problemlos und ohne Rückstände möglich, da durch die Vorvernetzung und die dünnen Gitterlinien keine dauerhafte und enge Bindung an das Bauteil erzielt wird.

Was nun den Abstand der durch die Vorvernetzung erzeugten Linien anbelangt, so kann dieser in weiten Bereichen variieren. Es hat sich jedoch bewährt, wenn die Linien einen Abstand von 0,01 bis 10 mm, insbesondere 0,1 bis 5 mm, vorzugsweise 0,2 bis 3 mm, bevorzugt 0,3 bis 1 mm, zueinander aufweisen.

Besonders gute Ergebnisse werden erhalten, wenn die Gitternetzlinien eine Maschenweite von 0,01 bis 10 mm, insbesondere 0,1 bis 5 mm, vorzugsweise 0,12 bis 3 mm, bevorzugt 0,15 bis 2 mm, aufweisen.

Was die Stärke der einzelnen Linien bzw. der vorvernetzen Bereich anbelangt, so hat es sich bewährt, wenn die Bereiche, insbesondere Linien, eine Stärke, insbesondere einen Durchmesser, von 0,01 bis 10 mm, insbesondere 0,1 bis 5 mm, vorzugsweise 0,4 bis 3 mm, bevorzugt 0,45 bis 2 mm, aufweisen. Mit Linienstärken und Linienabständen in den zuvor genannten Bereichen lässt sich eine Stützstruktur bzw. ein Hilfsgitter erhalten, welches einerseits die Herstellung des duroplastischen Bauteils vorteilhaft unterstützt, sich andererseits jedoch nach Durchführung des erfindungsgemäßen Verfahrens problemlos wieder entfernen lässt.

Wie zuvor bereits ausgeführt, wird durch die Vorvernetzung vorteilhafterweise eine Stützstruktur geschaffen.

Im Rahmen der vorliegenden Erfindung erfolgt die Vorvernetzung üblicherweise durch Eintrag von Energie, insbesondere mittels elektromagnetischer Strahlung.

In diesem Zusammenhang hat es sich bewährt, wenn die Energie als thermische Energie, insbesondere in Form von Laserstrahlung, eingetragen wird. Vorzugsweise ist die Energiequelle, insbesondere die Laserquelle bzw. der Lasergenerator, die gleiche Energiequelle, welche auch zur Herstellung des duroplastischen Materials verwendet wird.

Im Rahmen der vorliegenden Erfindung erfolgt der Energieeintrag für die Vorvernetzung üblicherweise mit einer Energie pro Fläche 0,01 bis 250 J/mm², insbesondere 0,01 bis 150 J/mm², vorzugsweise 0,1 bis 120 J/mm², bevorzugt 0,5 bis 100 J/mm², besonders bevorzugt 1 bis 90 J/mm², ganz besonders bevorzugt 2 bis 80 J/mm², insbesondere bevorzugt 2,5 bis 65 J/mm². Der Energieeintrag kann dabei in einem oder mehreren Schritten erfolgen. So kann das Baufeld beispielsweise erst in x-Richtung und anschließend in γ-Richtung bestrahlt werden.

Falls im Rahmen der vorliegenden Erfindung eine Stützstruktur geschaffen wird, so hat es sich bewährt, wenn die Stützstruktur im Anschluss an Verfahrensschritt (B) entfernt, vorzugsweise mechanisch entfernt, wird, insbesondere vor der Durchführung von Verfahrensschritt (C). Die Stützstruktur wird üblicherweise in dem Baufeld geschaffen, um die Herstellung einer dreidimensionalen Struktur, insbesondere eines Bauteils, zu ermöglichen. Insbesondere kann durch die Stützstruktur wirksam verhindert werden, dass die Zusammensetzung während der chemischen Vernetzung Tröpfchen bildet. Nach Herstellung der dreidimensionalen Struktur bzw. des Bauteils wird üblicherweise der über die dreidimensionalen Struktur bzw. das Bauteil hinausragende Teil der Stützstruktur wieder entfernt und vorzugsweise wieder zu der pulverförmigen Zusammensetzung, welche zur Durchführung des Verfahrens verwendet wird, verarbeitet.

Gleichfalls kann es vorgesehen sein, dass die Stützstruktur - gemäß einer weiteren Ausführungsform - im Anschluss an Verfahrensschritt (C) entfernt, vorzugsweise mechanisch entfernt wird, insbesondere in einem auf Verfahrensschritt (C) folgenden Verfahrensschritt (D).

Durch die Vorvernetzung werden im Rahmen der vorliegenden Erfindung somit keine Strukturen geschaffen, welche zum Bauteil, das heißt der herzustellenden dreidimensionalen Struktur, gehören.

Im Rahmen der zuvor geschilderten besonderen Ausführungsformen, bei welchen eine Vorvernetzung der Zusammensetzung durchgeführt wird, kann es darüber hinaus vorgesehen sein, dass in einem abschließenden Verfahrensschritt die dreidimensionale Struktur, insbesondere der Gegenstand, getempert wird. Das Tempern entspricht dem zuvor geschilderten Verfahrensschritt (c).

Es zeigen die Figurendarstellungen gemäß
Fig. 1 eine schematische Darstellung entlang einer xz-Ebene durch eine erfindungsgemäße Vorrichtung zur Beschreibung des erfindungsgemäßen Verfahrens;
Fig. 2 einen Ausschnitt aus dem Baufeld gemäß Fig. 1 in vergrößerter Darstellung,
Fig. 3 den in Fig. 2 dargestellten Ausschnitt aus dem Baufeld in der xy-Ebene und
Fig. 4 ein mit dem erfindungsgemäßen Verfahren hergestelltes Testteil.

Weiterer Gegenstand der vorliegenden Erfindung - gemäß einem **zweiten** Aspekt der vorliegenden Erfindung - ist eine Vorrichtung zur Herstellung dreidimensionaler duroplastischer Strukturen aus pulverförmigen Zusammensetzungen durch selektive Eintragung von Energie, insbesondere mittels Lasersinterns, wobei die Vorrichtung
(a) ein in einer Raumrichtung, insbesondere entlang einer z-Achse, insbesondere zumindest bereichsweise bewegbares Baufeld zur Bereitstellung einer pulverförmigen Zusammensetzung,
(b) mindestens eine Bevorratungseinrichtung zur Aufnahme und Abgabe der pulverförmigen Zusammensetzung,
(c) eine Verteilungseinrichtung zur Verteilung der pulverförmigen Zusammensetzung auf dem Baufeld und
(d) mindestens eine Einrichtung zur Erzeugung elektromagnetischer Strahlung und/oder zur Einstrahlung von elektromagnetischer Strahlung auf das Baufeld aufweist.

Bei dem Baufeld handelt es sich im Rahmen der vorliegenden Erfindung um den Bereich der erfindungsgemäßen Vorrichtung, in welchem die pulverförmige Zusammensetzung, insbesondere in Form eines Pulverbetts, bereitgestellt und die Herstellung der dreidimensionalen duroplastischen Struktur durch selektive Eintragung von Energie, insbesondere mittels Lasersintern, vorgenommen wird.

Die Oberfläche der Zusammensetzung, insbesondere des Pulverbetts, welche der Laserstrahlung ausgesetzt ist, ist vorteilhafterweise eben, insbesondere in Form einer xy-Ebene, ausgebildet.

Im Rahmen der vorliegenden Erfindung ist es vorgesehen, dass das Baufeld zumindest bereichsweise in einer Raumrichtung bewegbar ist. Vorteilhafterweise wird jedoch das gesamte Baufeld in eine Raumrichtung, insbesondere in z-Richtung, vorzugsweise entlang der z-Achse, beweglich ausgebildet sein.

Im Rahmen der vorliegenden Erfindung ist es darüber hinaus üblicherweise vorgesehen, dass die z-Richtung bzw. z-Achse senkrecht auf der xy-Ebene steht, wobei die xy-Ebene üblicherweise eine horizontale Ebene ist, um eine möglichst gleichmäßige Schichtdicke der pulverförmigen Zusammensetzung und einen gleichmäßigen Eintrag der Laserstrahlung zu gewährleisten.

Im Rahmen der vorliegenden Erfindung kann es vorgesehen sein, dass das Baufeld mittels eines Stempels und/oder eines Kolbens in eine Raumrichtung bewegbar ist. Wie zuvor bereits ausgeführt, kann es dabei vorgesehen sein, dass der Stempel bzw. der Kolben das gesamte Baufeld in eine Raumrichtung, insbesondere in z-Richtung, d. h. entlang der z-Achse, beweglich ausgebildet ist.

Weiterhin kann es vorgesehen sein, dass die Bevorratungseinrichtung zur Aufnahme und Abgabe der pulverförmigen Zusammensetzung einen in eine Raumrichtung, insbesondere in z-Richtung, d. h. entlang einer z-Achse, bewegbaren Kolben bzw. Stempel aufweist. Durch Heben und Senken des Stempels bzw. Kolbens kann somit der Raum zur Aufnahme des Pulvers vergrößert oder verkleinert werden, wobei entweder Pulver aufgenommen oder zur Verfügung gestellt wird. Gleichfalls kann es jedoch auch vorgesehen sein, dass andere Bevorratungseinrichtungen verwendet werden, beispielsweise Zellradschleusen.

Darüber hinaus ist im Rahmen der vorliegenden Erfindung vorteilhafterweise vorgesehen, dass die Verteilungseinrichtung zur Verteilung der pulverförmigen Zusammensetzung auf dem Baufeld zur Verteilung der pulverförmigen Zusammensetzung auf dem Baufeld in Form einer Schicht, insbesondere einer homogenen Schicht, ausgebildet ist. Besonders bevorzugt wird es dabei, wenn die Verteilungseinrichtung zur Verteilung der pulverförmigen Schicht homogene Schichten mit einer Schichtstärke im Bereich von 0,005 bis 1 mm, insbesondere 0,01 bis 0,8 mm, vorzugsweise 0,02 bis 0,5 mm, bevorzugt 0,02 bis 0,20 mm, besonders bevorzugt 0,04 bis 0,15 mm, ganz besonders bevorzugt 0,06 bis 0,12 mm, erzeugen kann.

Was nun die Beschaffenheit der Verteilungseinrichtung anbelangt, so kann diese auf jede denkbar geeignete Möglichkeit ausgebildet sein. Es werden jedoch gute Ergebnisse erhalten, wenn die Verteilungseinrichtung zur Verteilung der pulverförmigen Zusammensetzung ein Roller und/oder Rakel ist. Insbesondere durch Roller und/oder Rakel lässt sich eine besonders gleichmäßige und homogene Schichtdicke der pulverförmigen Zusammensetzung erzielen.

Die Einrichtung zur Erzeugung von elektromagnetischer Strahlung und/oder zur Einstrahlung von elektromagnetischer Strahlung auf das Baufeld kann im Rahmen der vorliegenden Erfindung auf jede erdenklich geeignete Art und Weise ausgebildet sein. So kann die Einstrahlung der elektromagnetischen Strahlung beispielsweise durch Laserstrahlung und Ablenkmittel erfolgen. Gleichfalls kann die Energie auch durch Laserdioden mit Ablenkeinheit oder Laserdioden ohne Ablenkeinheit erfolgen. Darüber hinaus ist auch der Einsatz von digital ansteuerbaren Projektoren oder die selektive Abschattung eines flächig wirkenden Heizelements oberhalb des Baufelds durch den Einsatz von Blenden oder digital einstellbaren Blenden möglich. Im Rahmen der vorliegenden Erfindung wird jedoch der Einsatz von Lasern und/oder Laserdioden bevorzugt.

Im Rahmen der vorliegenden Erfindung ist es somit vorzugsweise vorgesehen, dass die Einrichtung zur Erzeugung von elektromagnetischer Strahlung und/oder zur Einstrahlung von elektromagnetischer Strahlung auf das Baufeld mindestens ein Mittel (9), insbesondere einen Lasergenerator, zur Erzeugung von Laserstrahlen, aufweist.

Gleichfalls ist es Rahmen der vorliegenden Erfindung möglich, dass die Einrichtung zur Erzeugung von elektromagnetischer Strahlung und/oder zur Einstrahlung von elektromagnetischer Strahlung auf das Baufeld mindestens ein Mittel (10), insbesondere ein Ablenkmittel, zur Ablenkung der in dem Mittel zur Erzeugung von Laserstrahlen erzeugten Laserstrahlen aufweist.

Was nun das Mittel zur Erzeugung von Laserstrahlung anbelangt, so hat es sich bewährt, wenn das Mittel zur Erzeugung von Laserstrahlen Laserstrahlen mit einem Querschnitt von 0,0001 bis 1 mm², insbesondere 0,001 bis 0,5 mm², vorzugsweise 0,01 bis 0,1 mm², bevorzugt 0,02 bis 0,05 mm², erzeugen kann. Mit Laserstrahlen, welche die vorgenannten Querschnitte aufweisen, lassen sich sowohl Hilfs- bzw. Stützstrukturen als auch der eigentliche Lasersintervorgang in hervorragender Weise durchführen.

Darüber hinaus ist es im Rahmen der vorliegenden Erfindung üblicherweise vorgesehen, dass das Mittel zur Ablenkung der in dem Mittel zur Erzeugung von Laserstrahlung erzeugten Laserstrahlen zur ortsaufgelösten Ablenkung der Laserstrahlen auf das Baufeld ausgebildet ist. Eine Ablenkung der Laserstrahlen auf das Baufeld kann beispielsweise durch eine Spiegelanordnung erfolgen.

Was nun die Abdeckung des Baufeldbereiches mit der elektromagnetischen Strahlung, insbesondere der Laserstrahlung, anbelangt, so hat es sich bewährt, wenn die Einrichtung zur Erzeugung von elektromagnetischer Strahlung und/oder zur Einstrahlung von elektromagnetischer Strahlung eine Einstrahlung der elektromagnetischen Strahlung auf mindesten 80 %, insbesondere mindestens 90 %, vorzugsweise mindestens 95 %, der Fläche des Baufeldes ermöglicht.

Darüber hinaus kann es vorgesehen sein, dass die Einrichtung zur Erzeugung von elektromagnetischer Strahlung und/oder zur Einstrahlung von elektromagnetischer Strahlung eine Einstrahlung der elektromagnetischen Strahlung, insbesondere der Laserstrahlung, auf 50 bis 100 %, insbesondere 80 bis 100 %, vorzugsweise 90 bis 99, bevorzugt 95 bis 99 %, der Fläche des Baufeldes ermöglicht. Durch eine besonders hohe Ausnutzung der Fläche des Baufeldes kann der Materialeinsatz, insbesondere die Menge an verwendeter pulverförmiger Zusammensetzungen, auf ein Minimum reduziert werden.

Gemäß einer bevorzugten Ausführungsform der vorliegenden Erfindung weist die Vorrichtung eine Prozesskammer, insbesondere eine geschlossene Prozesskammer, auf. Besonders vorteilhaft ist es dabei, wenn die Prozesskammer zumindest das Baufeld umfasst und/oder umschließt. Es ist jedoch im Allgemeinen vorgesehen, die Prozesskammer jedoch nicht nur den Baufeldbereich, sondern vielmehr auch die Bevorratungseinrichtung zur Abgabe und Aufnahme der pulverförmigen Zusammensetzung und die Verteilungseinrichtung umfasst. Hierdurch wird ermöglicht, dass die pulverförmige Zusammensetzung unter stets gleichen Bedingungen gelagert und verarbeitet werden kann.

Eine Prozesskammer ist insbesondere dann vorteilhaft, wenn unter speziellen atmosphärischen Bedingungen, beispielsweise unter Unterdruck oder in eine Inertgas- bzw. Schutzgasatmosphäre, gearbeitet werden soll.

Die Prozesskammer verhindert insbesondere auch einen Materialaustausch mit der Umgebung. In einfachen Ausführungen der Prozesskammer wird zumindest ein Austausch von Feststoffen und Flüssigkeiten verhindert, d. h. Flüssigkeiten und Feststoffe gelangen nicht an die Umgebung und aus der Umgebung gelangen keine unerwünschten festen oder flüssigen Stoffe in den Baufeldbereich und stören die Durchführung des erfindungsgemäßen Verfahrens. Gemäß einer bevorzugten Ausführungsform ist die Prozesskammer auch gegenüber Gasen geschlossen, das heißt auch Gase können nicht in die Prozesskammer eindringen oder aus dieser herausgelangen.

Weiterhin kann es im Rahmen der vorliegenden Erfindung vorgesehen sein, dass die Vorrichtung eine Temperaturregelungseinrichtung, insbesondere eine Heizeinrichtung, zur Einstellung einer homogenen Temperatur des Baufeldes aufweist. Wie zuvor bereits ausgeführt, ist die Temperatur der pulverförmigen Zusammensetzung bei Durchführung des erfindungsgemäßen Verfahrens üblicherweise unkritisch, jedoch kann es spezielle Anwendungen geben, bei welchen die Einhaltung eines definierten Temperaturregimes notwendig oder vorteilhaft ist.

Darüber hinaus kann es vorgesehen sein, dass die Vorrichtung eine Einrichtung zur Regelung der Atmosphäre in der Prozesskammer aufweist. Die Einrichtung zur Regelung der Atmosphäre in der Prozesskammer kann dabei entweder eine Schutzgasatmosphäre erzeugen und/oder den Druck innerhalb der Prozesskammer regeln.

Im Rahmen der vorliegenden Erfindung ist es darüber hinaus üblicherweise vorgesehen, dass die Vorrichtung eine Steuerungseinrichtung zur Durchführung des erfindungsgemäßen Verfahrens aufweist.

Für weitere Einzelheiten zu der erfindungsgemäßen Vorrichtung kann auf die vorigen Ausführungen zu dem erfindungsgemäßen Verfahren verwiesen werden, welche in Bezug auf die erfindungsgemäße Vorrichtung entsprechend gelten.

Weiterer Gegenstand der vorliegenden Erfindung - gemäß einem **dritten** Aspekt der vorliegenden Erfindung - ist die Verwendung der zuvor geschilderten Vorrichtung zur Herstellung dreidimensionaler duroplastischer Strukturen aus pulverförmigen Zusammensetzungen durch selektive Eintragung von Energie, insbesondere mittels Lasersinterns.

Für weitere Einzelheiten zu der erfindungsgemäßen Verwendung einer Vorrichtung kann auf die vorigen Ausführungen zu den weiteren Erfindungsaspekten verwiesen werden, welche in Bezug auf die erfindungsgemäße Vorrichtung entsprechend gelten.

Wiederum weiterer Gegenstand der vorliegenden Erfindung - gemäß einem **vierten** Aspekt der vorliegenden Erfindung - ist eine Zusammensetzung zur Herstellung einer dreidimensionalen duroplastischen Struktur, insbesondere wie zuvor geschildert, mittels selektiver Eintragung von Energie, insbesondere mittels Laserstrahlung, wobei die Zusammensetzung in Form eines Pulvers, insbesondere eines rieselfähigen Pulvers, vorliegt.

Besonders gute Ergebnisse werden erhalten, wenn das Pulver Partikel mit Partikelgrößen im Bereich von 1 bis 200 µm, insbesondere 5 bis 150 µm, vorzugsweise 8 bis 100 µm, bevorzugt 10 bis 80 µm, besonders bevorzugt 10 bis 65 µm, aufweist.

Gemäß einer bevorzugten Ausführungsform der vorliegenden Erfindung besteht das Pulver ausschließlich aus Partikeln mit Partikelgrößen in den vorgenannten Bereichen.

Im Rahmen der vorliegenden Erfindung werden besonders gute Ergebnisse erhalten, wenn das Pulver eine Partikelgröße D60 von 20 bis 100 µm, insbesondere 25 bis 50 µm, vorzugsweise 27 bis 40 µm, bevorzugt 30 bis 35 µm, aufweist. Eine Partikelgröße D60 bedeutet, dass 60 % der Partikel die gleiche oder eine geringere Partikelgröße aufweisen als der genannte Wert.

Was die Bestimmung der Partikelgröße im Allgemeinen anbelangt, so kann diese anhand von dem Fachmann an sich wohlbekannten Verfahren vorgenommen werden. Insbesondere können die Partikelgrößen im Allgemeinen mit Bestimmungsverfahren auf Basis von Röntgenbeugung und Laserdiffraktometrie sowie lichtmikroskopisch, elektronenmikroskopisch oder dergleichen bestimmt werden. Insbesondere beziehen sich die zuvor für das leitfähige Additiv im Allgemeinen angeführten Größenangaben auf eine zumindest im Wesentlichen kugelförmige Grundstruktur. Sofern die in Rede stehenden Teilchen bzw. Partikel von einer kugelförmigen Grundstruktur bzw. von einer Kugelform abweichen, können sich die in Rede stehenden Größenangaben auf eine angenommene Kugelform beziehen, welche ein identisches Volumen wie die zugrundeliegenden und von der Kugelform abweichenden Teilchen bzw. Partikel aufweist. Hierzu kann insbesondere auf *Rawle, A., "Basic Principles of Particle-Size Analysis", Surface Coatings International, Part A, Issue 2003*/*02,* verwiesen werden. Im Rahmen der vorliegenden Erfindung erfolgt die Partikelgrößenbestimmung insbesondere nach ISO Standard 13320:2009 mittels Laserdifraktonie.

Im Rahmen der vorliegenden Erfindung werden somit sehr feinteilige und homogene Pulver eingesetzt, um das erfindungsgemäße Verfahren durchzuführen. Die Verwendung feinteiliger und homogener Pulver führt zur Ausbildung besonders homogener Schichten auf dem Baufeld und ermöglicht auch ein rasches homogenes Aufschmelzen der Zusammensetzung während der Lasersinterung.

Im Allgemeinen weist die Zusammensetzung eine Dichte von 1,05 bis 1,9 g/cm³, insbesondere 1,1 bis 1,6 g/cm³, vorzugsweise 1,2 bis 1,4 g/cm³, auf.

Im Rahmen der vorliegenden Erfindung ist darüber hinaus üblicherweise vorgesehen, dass die Zusammensetzung mindestens eine reaktive Komponente aufweist. Die reaktive Komponente bildet durch Reaktion, insbesondere Vernetzung, ein duroplastisches Material, welches sich grundlegend von den bislang im Stand der Technik eingesetzten thermoplastischen Materialien für die selektive Lasersinterung unterscheidet.

In diesem Zusammenhang werden im Rahmen des vorliegenden Erfindung besonders gute Ergebnisse erhalten, wenn die reaktive Komponente ausgebildet ist aus reaktiven Monomeren, reaktiven Oligomeren und reaktiven Polymeren sowie deren Mischungen, vorzugsweise reaktiven Oligomeren und reaktiven Polymeren sowie deren Mischungen.

Die Zusammensetzung der reaktiven Komponente kann somit aus ein oder mehreren Einzelverbindungen bestehen. Darüber hinaus ist es auch möglich, dass ein oder mehrere der Verbindungen der reaktiven Komponenten flüssig sind. Es muss jedoch gewährleistet sein, dass die Zusammensetzung als solche ein Pulver, insbesondere ein rieselfähiges feinteiliges Pulver, ist.

Was nun das Molekulargewicht der reaktiven Komponente anbelangt, so kann dieses in weiten Bereichen variieren, je nachdem, ob Monomere, Oligomere oder Polymere eingesetzt werden. Es hat sich jedoch bewährt, wenn die reaktive Komponente oder zumindest ein Bestandteil der reaktiven Komponente ein gewichtsmittleres Molekulargewicht M_{w} im Bereich von 50 bis 20.000 g/mol, insbesondere 1.000 bis 15.000 g/mol, vorzugsweise 1.200 bis 10.000 g/mol, bevorzugt 1.500 bis 8.000 g/mol, besonders bevorzugt 1.800 bis 7.000 g/mol, aufweist. Bei der reaktiven Komponente handelt es sich somit vorzugsweise um die Harzkomponente eines duroplastischen Systems.

Was nun die chemische Beschaffenheit der reaktiven Komponente anbelangt, so ist diese üblicherweise ausgewählt aus Polyestern, Polyurethanen, Polyacrylaten, Polyepoxiden und deren Mischungen.

Besonders gute Ergebnisse werden jedoch erhalten, wenn die reaktive Komponente ein Polyester ist. In diesem Zusammenhang kann es vorgesehen sein, dass der Polyester mit Hydroxyfunktion oder Carbonsäurefunktionen, funktionalisiert, d. h. hydroxylgruppen- oder carboxylgruppenhaltig, ist. Die Hydroxy- bzw. Carbonsäurefunktionen bilden reaktive funktionelle Gruppen, über welche der Polyester vernetzen kann.

Beste Ergebnisse werden im Rahmen der vorliegenden Erfindung erhalten, wenn die reaktive Komponente ein saurer Polyester ist. Besonders bevorzugt wird es in diesem Zusammenhang, wenn der saure Polyester eine Säurezahl von 10 bis 80 mg KOH/g, insbesondere 20 bis 60 mg KOH/g, vorzugsweise 30 bis 40mg KOH/g, aufweist. Bei der erfindungsgemäß bevorzugt eingesetzten reaktiven Komponente handelt es sich somit um ein saures Polyesterharz. Das Polyesterharz kann dabei entweder amorph, kristallin oder semi-kristallin sein.

Im Rahmen der vorliegenden Erfindung besonders geeigneter Polyester sind beispielsweise in der DE 102 33 010 A1 oder der EP 1 426 423 A1 offenbart.

Geeignete saure Polyester, insbesondere amorph, sind beispielsweise erhältlich aus einer Kombination aus mindestens einer aliphatischen und/oder cycloaliphatischen und/oder aromatischen Di- und/oder Polycarbonsäure und einem aliphatischen und/oder cycloaliphatischen und/oder aromatischen Di- und/oder Polycarbonsäureester. Dabei ist es unerheblich, welche Alkoholkomponente zur Veresterung der Di- oder Polycarbonsäure verwendet wird. Bevorzugt werden Methylester eingesetzt.

Die sauren Polyester können aus an sich bekannter Weise durch Kondensation in einer Inertgasatmosphäre bei Temperaturen von 100 bis 260 °C, vorzugsweise von 130 bis 220 °C in der Schmelze oder durch das Azeotrop-Verfahren gewonnen werden, wie es z. B. in Methoden der Organischen Chemie (Houben-Weyl), Bd. 14/2, Seiten 1 bis 29 und 40 bis 47, Georg Thieme Verlag, Stuttgart, 1963 oder bei C. R. Martens, Alkyd Resins, Seiten 51 bis 59, Reinhold Plastics Appl., Series, Reinhold Publishing Comp., New York, 1961 beschrieben ist.

Als Beispiele für die Herstellung von Polyestern verwendete Carbonsäuren seien genannt: Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutarsäure, 1,4-Cyclohexandicarbonsäure bzw. deren Ester. Besonders gut geeignet sind Isophthalsäure, Terephthalsäure, Hexahydroterephthalsäure, Hexahydrophthalsäure, Adipinsäure, Bernsteinsäure bzw. deren Ester.

Als Polyole zur Herstellung der Polyester kommen z. B. Monoethylenglykol, 1,2-und 1,3-Propylenglykol, 1,4- und 2,3-Butylenglykol, Di-&bgr;-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methylpentandiol-1,5, 2,2,4(2,4,4)-Trimethylhexandiol-1,6, Glyzerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, in Frage.

Bevorzugte Alkohole sind Monoethylenglykol, Butandiol-1,4, Pentandiol,-1,5, Hexandiol-1,6, Neopentylglykol, Bis-(1,4-hydroxymethyl)-cyclohexan, 2,2,4(2,4,4)-Trimethylhexandiol-1,6, Hydroxypivalinsäureneopentylglykolester, Trimethylolpropan und Glycerin.

So hergestellt amorphe Polyester haben eine Glasübergangstemperatur von 30 bis 90 °C.

Gleichermaßen können geeignete Mischungen von COOH-gruppenhaltigen und/oder OH-gruppenhaltigen Polyestern aufweisend 10 bis 80 Gew.-% mindestens eines zuvor beschriebenen amorphen Polyesters, und 20 bis 90 Gew.-% mindestens eines (semi)kristallinen Polyesters, erhalten durch Umsetzung von 50 bis 100 Mol-% Bernsteinsäure und/oder Adipinsäure und/oder Sebacinsäure und/oder Dodecandisäure und/oder -anhydrid und/oder -ester und 50 bis 100 Mol-% Monoethylenglykol, Butandiol-1,4 und/oder Hexandiol-1,6, verwendet werden.

Vorzugsweise handelt es sich bei dem Polyester um Mischungen aus 40 bis 80 Gew.-%, bevorzugt 60 bis 70 Gew.-%, mindestens eines amorphen Polyesters und 20 bis 60 Gew.-%, bevorzugt 30 bis 40 Gew.-%, mindestens eines (semi)kristallinen Polyesters.

Die (semi)kristallinen Polyester weisen üblicherweise in der Regel eine COOH- bzw. OH-Zahl von 15 bis 150 mg KOH/g auf. Die Schmelzpunkte liegen üblicherweise zwischen 60 und 130 °C, während die Glasübergangstemperatur im Allgemeinen höher als -10 °C ist. Das gewichtsmittlere Molekulargewicht liegt vorzugsweise zwischen 1800 und 6500 g.

Die semi(kristallinen) Polyester basieren auf linearen Dicarbonsäuren und aliphatischen oder cycloaliphatischen, linearen oder verzweigten Polyolen. Als Dicarbonsäuren werden Bernsteinsäure, diese ist bevorzugt, und/oder Adipinsäure und/oder Sebacinsäure und/oder Dodecandisäure in Mengen von mindestens 50 mol-%, bevorzugt von mindestens 85 mol-%, bezogen auf die Gesamtmenge aller Carbonsäuren, eingesetzt.

Der Ausdruck Dicarbonsäure schließt dabei stets auch deren Ester, Anhydride oder Säurechloride ein, da sie ebenfalls eingesetzt werden können.

In deutlich geringeren Anteilen bis maximal 50 mol-%, bevorzugt bis 15 mol-%, können gegebenenfalls andere aliphatische, cycloaliphatische oder aromatische Dicarbonsäuren mitverwendet werden. Beispiele für derartige Dicarbonsäuren sind Glutarsäure, Azelainsäure, 1,4-, 1,3- oder 1,2-Cyclohexandicarbonsäure, Terephthalsäure oder Isophthalsäure.

Als Polyolkomponente für die (semi)kristallinen Polyester werden Monoethylenglykol und/oder Butandiol-1,4, dieses ist bevorzugt, und/oder Hexandiol-1,6 in Mengen von mindestens 50 mol-%, bevorzugt 80 mol-%, bezogen auf die Gesamtmenge aller Polyole, eingesetzt. In Mengen von maximal 50 mol-%, bevorzugt 20 mol-% können gegebenenfalls andere aliphatische oder cycloaliphatische, lineare oder verzweigte Polyole mitverwendet werden. Beispiele solcher Polyole sind Diethylenglykol, Hydroxypivalinsäureneopentylglykol, Neopentylglykol, Cyclohexandimethanol, Pentandiol-1,5, Pentandiol-1,2, Nonandiol-1,9, Trimethylolpropan, Glycerin oder Pentaerythrit.

Was nun die Menge an reaktiver Komponente in der erfindungsgemäßen Zusammensetzung anbelangt, so kann diese naturgemäß in Abhängigkeit von den jeweils zu erzielenden Eigenschaften des duroplastischen Materials in weiten Bereichen variieren. Üblicherweise weist die Zusammensetzung die reaktive Komponente jedoch in Mengen von 50 bis 99 Gew.-%, insbesondere 60 bis 95 Gew.-%, vorzugsweise 65 bis 90 Gew.-%, bezogen auf die Zusammensetzung, auf.

Üblicherweise weist die reaktive Komponente eine Erweichungstemperatur von über 70 °C, insbesondere über 80 °C, bevorzugt über 90 °C, auf.

Weiterhin kann es vorgesehen sein, dass die reaktive Komponente eine Erweichungstemperatur im Bereich vom 70 bis 150 °C, insbesondere von 80 bis 140 °C, bevorzugt von 90 bis 130 °C, aufweist.

Gleichermaßen kann es im Rahmen der vorliegenden Erfindung vorgesehen sein, dass die Zusammensetzung mindestens einen Vernetzer aufweist. Bei einem Vernetzer handelt es sich um eine meist niedermolekulare chemische Verbindung, welche reaktive Gruppen, wie beispielsweise Epoxy-Funktionen, aufweist, über welche der Vernetzer mit weiteren Bestandteilen der Zusammensetzung, insbesondere der reaktiven Komponente der erfindungsgemäßen Zusammensetzung reagiert. Vorzugsweise weist der Vernetzer mehrere reaktive Funktionen auf, um mit mehreren Molekülen der reaktiven Komponente zu reagieren und eine Vernetzung zwischen diesen herzustellen.

Die Gegenwart eines Vernetzers ist jedoch entbehrlich, wenn die reaktive Komponente mit sich selbst, das heißt mit anderen Molekülen der reaktiven Komponente, reagieren kann.

Falls die Zusammensetzung einen Vernetzer enthält, so enthält die Zusammensetzung den Vernetzer üblicherweise in Mengen von 0,1 bis 20 Gew.-%, insbesondere 1 bis 15 Gew.-%, vorzugsweise 3 bis 10 Gew.-%, bevorzugt 4 bis 7 Gew.-%, bezogen auf die Zusammensetzung.

Der Vernetzer kann aus sämtlichen geeigneten chemischen Verbindungen ausgewählt werden. Es hat sich jedoch bewährt, dass wenn der Vernetzer ausgebildet aus Epoxiden, insbesondere Glycidylestern, Triglycidylisocyanuraten, Hydroxyalkylamiden, insbesondere β-Hydroxyalkylamiden, und Polyisocyanaten sowie deren Mischungen.

Besonders gute Ergebnisse werden im Rahmen der vorliegenden Erfindung erhalten, wenn der Vernetzer ein Glycidylester ist. Glycidylester reagieren insbesondere mit sauren Polyesterharzen durch Polyaddition zu besonders geeigneten Materialien. Vorzugsweise werden im Rahmen der vorliegenden Erfindung Glycidylester von Polycarbonsäuren, beispielsweise Terephthalsäurediglycidester, Trimellithsäuretriglycidester oder Hexahydrophthalsäurediglydidester, eingesetzt.

Was nun das Verhältnis von reaktiver Komponente zu Vernetzer anbelangt, so kann diese gleichfalls in Abhängigkeit von den jeweiligen Edukten in weiten Bereichen variieren. Es hat sich jedoch gezeigt, dass besonders gute Ergebnisse erhalten werden, wenn die Zusammensetzung ein Verhältnis der Anzahl der reaktiven Gruppen der reaktiven Komponente zur Anzahl der reaktiven Gruppen des Vernetzers im Bereich von 1,5 : 1 bis 1 : 2, insbesondere 1 : 1 bis 1 : 1,5, vorzugsweise 1 : 1,1 bis 1 : 1,4, bevorzugt 1 : 1,15 bis 1 : 1,25, aufweist. Bevorzugt liegt somit ein leichter Überschuss an reaktiven Gruppen des Vernetzer vor.

Gemäß einer Ausführungsform der vorliegenden Erfindung weist die Zusammensetzung eine nichtreaktive thermoplastische Komponente auf. Wie zuvor bereits ausgeführt, ist eine nichtreaktive thermoplastische Komponente üblicherweise nicht notwendig zur Durchführung des erfindungsgemäßen Verfahrens, sie kann jedoch von Vorteil sein, um beispielsweise eine Hilfs- bzw. Stützstruktur bei der Durchführung des erfindungsgemäßen Verfahrens zu erhalten. Auf eine nichtreaktive thermoplastischer Komponente kann beispielsweise auch verzichtet werden, wenn die reaktive Komponente derart ausgebildet ist, dass sie in einem Temperaturbereich vorvernetzt, d. h. angeliert werden kann, in welchem noch keine chemische Reaktion, insbesondere keine duroplastische Vernetzung stattfindet. Auf diese Weise kann beispielsweise eine reversible Vorvernetzung durch die reaktive Komponente erfolgen, wodurch eine Hilfsstruktur erhalten wird, ehe die chemische Vernetzung, d. h. die duroplastische Reaktion einsetzt.

Die Erzeugung einer Hilfsstruktur durch Vorvernetzung hat darüber hinaus den Vorteil, dass die Vorvernetzung reversibel ist, das heißt die Hilfsstruktur kann einerseits einfach von der dreidimensionalen Struktur, insbesondere dem Gegenstand oder Bauteil wieder entfernt werden, während die Zusammensetzung beispielsweise durch Vermahlen der vorvernetzten Hilfsstruktur wiedergewonnen werden kann. Es geht somit kein Anteil der Zusammensetzung verloren, welcher nicht zur Herstellung der dreidimensionalen Struktur benötigt wird.

Wenn die Zusammensetzung im Rahmen der vorliegenden Erfindung eine nichtreaktive thermoplastische Komponente aufweist, so ist die nichtreaktive thermoplastische Komponente üblicherweise ausgewählt aus Polyacrylaten, Polyurethanen, Polyamiden, Polyolefinen, Polyestern oder deren Mischungen und Coploymeren.

Besonders gute Ergebnisse werden in diesem Zusammenhang erhalten, wenn die nichtreaktive thermoplastische Komponente ausgewählt ist aus Polyamiden und Polyolefinen sowie deren Mischungen und Coploymeren.

Wenn die Zusammensetzung eine nichtreaktive thermoplastische Komponente aufweist, so weist die Zusammensetzung die nichtreaktive thermoplastische Komponente üblicherweise in Mengen von 5 bis 50 Gew.-%, insbesondere 8 bis 40 Gew.-%, vorzugsweise 10 bis 30 Gew.-%, bevorzugt 10 bis 20 Gew.-%, bezogen auf die Zusammensetzung, auf.

Falls die Zusammensetzung im Rahmen der vorliegenden Erfindung eine nichtreaktive thermoplastische Komponente aufweist, so kann es vorgesehen sein, dass die Zusammensetzung die reaktive Komponente in Mengen von 50 bis 85 Gew.-%, insbesondere 60 bis 80 Gew.-%, vorzugsweise 65 bis 75 Gew.-%, bezogen auf die Zusammensetzung, aufweist. Es kann somit ein Teil der reaktiven Komponente durch die nichtreaktive thermoplastische Komponente substituiert werden.

Im Allgemeinen weist die Zusammensetzung mindestens einen Füllstoff und/oder mindestens ein Pigment auf. Falls die Zusammensetzung einen Füllstoff und/oder ein Pigment aufweist, so weist die Zusammensetzung den Füllstoff und/oder das Pigment vorzugsweise in Mengen von 0,1 bis 25 Gew.-%, insbesondere 1 bis 15 Gew.-%, vorzugsweise 2 bis 10 Gew.-%, bevorzugt 3 bis 7 Gew.-%, bezogen auf die Zusammensetzung, auf.

Falls die Zusammensetzung einen Füllstoff enthält, so ist der Füllstoff üblicherweise ausgewählt aus organischen Füllstoffen und anorganischen Füllstoffen sowie deren Mischungen.

Besonders gute Ergebnisse werden jedoch erhalten, wenn der Füllstoff ein anorganischer Füllstoff ist, insbesondere ausgewählt aus Titandioxid, Bariumsulfat und Calciumcarbonat, ist. Füllstoffe, insbesondere anorganische Füllstoffe, werden eingesetzt, um die Laserenergie zu absorbieren bzw. zu reflektieren, da duroplastisches Material üblicherweise farblos ist.

Darüber hinaus kann es auch sein, dass die Zusammensetzung ein Pigment enthält, wobei das Pigment gleichfalls ausgewählt sein kann aus organischen und anorganischen Pigmenten. Die Verwendung anorganischer Pigmente ist jedoch auch in diesem Fall bevorzugt. Pigmente dienen einerseits der Einfärbung der Zusammensetzung bzw. des erhaltenen duroplastischen Materials sowie der Absorption bzw. Reflektion von Laserstrahlung.

Gemäß einer besonderen Ausführungsform der vorliegenden Erfindung ist es vorgesehen, dass die Zusammensetzung mindestens ein Verlaufmittel aufweist. Falls die Zusammensetzung ein Verlaufmittel aufweist, so enthält die Zusammensetzung das Verlaufsmittel in Mengen von 0,1 bis 10 Gew.-%, insbesondere 0,5 bis 5 Gew.-%, vorzugsweise 1 bis 3 Gew.-%, bevorzugt 1,5 bis 2,5 Gew.-%, bezogen auf die Zusammensetzung. Über Verlaufmittel können die Viskositätseigenschaften der Zusammensetzung in der Schmelze gezielt eingestellt werden und eine möglichst gute Vernetzung innerhalb der einzelnen Lagen sowie auch zwischen den Lagen der dreidimensionalen Struktur erreicht werden.

Im Rahmen der vorliegenden Erfindung werden bevorzugt insbesondere ca. 2 Gew.-% eines Verlaufmittels gemäß dieser Ausführungsform eingesetzt. Besonders bevorzugte Verlaufmittel sind Polyacrylatharze.

Weiterhin kann es im Rahmen der vorliegenden Erfindung vorgesehen sein, dass die Zusammensetzung mindestens ein Additiv aufweist. In diesem Zusammenhang werden besondere gute Ergebnisse erhalten, wenn die Zusammensetzung das Additiv in Mengen von 0,1 bis 15 Gew.-%, insbesondere 0,5 bis 10 Gew.-%, vorzugsweise 1 bis 5 Gew.-%, bevorzugt 2 bis 3 Gew.-%, bezogen auf die Zusammensetzung, aufweist.

Falls die Zusammensetzung gemäß der vorliegenden Erfindung ein Additiv aufweist, so ist das Additiv üblicherweise ausgewählt aus Fließmitteln, Oberflächenhärtern, Rieselhilfen, Fluidisierhilfen und deren Mischungen. Durch das Additiv sollen die Eigenschaften der pulverförmigen Zusammensetzung, insbesondere die physikalischen Eigenschaften während des Lasersinterns, eingestellt werden. Darüber hinaus können durch Additive auch gezielt die Eigenschaften der resultierenden Werkstoffe beeinflusst werden.

Gegenstand der vorliegenden Erfindung ist somit eine zuvor beschriebene Zusammensetzung, wobei die Zusammensetzung umfasst:
(a) mindestens eine reaktive Komponente in Mengen von 50 bis 99 Gew.-%, bezogen auf die Zusammensetzung,
(b) mindestens einen Vernetzer in Mengen von 0,1 bis 20 Gew.-%, bezogen auf die Zusammensetzung,
(c) mindestens eine nichtreaktive thermoplastische Komponente in Mengen von 5 bis 50 Gew.-%,
(d) mindestens einen Füllstoff und/oder ein Pigment in Mengen von 0,1 bis 25 Gew.-%,
(e) mindestens ein Verlaufmittel in Mengen von 0,1 bis 10 Gew.-%, bezogen auf die Zusammensetzung, und
(f) mindestens ein Additiv in Mengen von 0,1 bis 15 Gew.-%, bezogen auf die Zusammensetzung.

Für weitergehende Einzelheiten zu der erfindungsgemäßen Zusammensetzung kann auf die vorherigen Ausführungen zu den anderen Erfindungsaspekten verwiesen werden, welche in Bezug auf die erfindungsgemäße Zusammensetzung entsprechend gelten.

Wiederum weiterer Gegenstand der vorliegenden Erfindung - gemäß einem fünften Aspekt der vorliegenden Erfindung - ist die Verwendung der zuvor beschriebenen Zusammensetzung zur Herstellung einer dreidimensionalen duroplastischen Struktur.

Für weitergehende Einzelheiten zu diesem Erfindungsaspekt kann auf die vorherigen Ausführungen zu den anderen Erfindungsaspekten verwiesen werden, welche in Bezug auf die erfindungsgemäße Verwendung einer Zusammensetzung entsprechend gelten.

Der Gegenstand der vorliegenden Erfindung wird nachfolgend anhand der Figurendarstellung in nicht beschränkender Weise exemplarisch verdeutlicht.

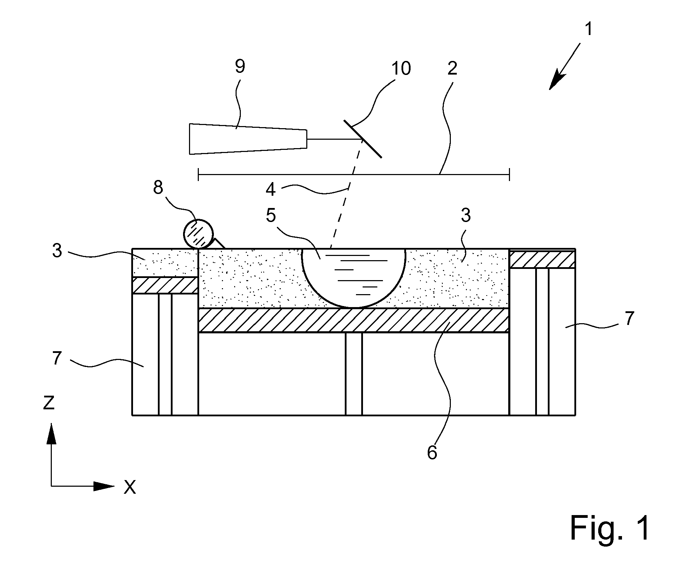

Es zeigt Fig. 1 einen Schnitt durch eine erfindungsgemäße Vorrichtung 1 zur Erzeugung dreidimensionaler duroplastischer Strukturen mittels selektiver Lasersinterung entlang einer xz-Ebene.

Die Vorrichtung 1 weist in einer xy-Ebene, welche senkrecht zur xz-Ebene steht, ein Baufeld auf, dessen Baufelderstreckung 2 in x-Richtung in Fig. 1 dargestellt ist. Auf dem Baufeld wird aus einer pulverförmigen Zusammensetzung 3 durch selektive Einstrahlung von Laserstrahlen 4 eine dreidimensionale Struktur 5 erzeugt. Das Baufeld ist durch einen Kolben 6 in z-Richtung zumindest bereichsweise, insbesondere entlang einer z-Achse, welche senkrecht auf der xy-Ebene steht, beweglich ausgebildet. In der in der Figurendarstellung dargestellten Ausführungsform ist das gesamte Baufeld über seine Baufelderstreckung 2, insbesondere die gesamte Erstreckung des Baufeldes in x- und γ-Richtung, durch den Kolben 6 beweglich. Es kann jedoch auch sein, dass gemäß einer alternativen, nicht in der Figurendarstellung dargestellten Ausführungsform nur ausgewählte Bereiche des Baufeldes in z-Richtung, d. h. entlang einer z-Achse, beweglich sind. Bereiche des Baufeldes können somit beispielsweise in Form von Stempeln ausgebildet sein, welche insbesondere unabhängig voneinander in z-Richtung bewegt werden können, so dass ausgewählte Bereiche des Baufeldes in z-Richtung bewegt werden können.

Das in der Figurendarstellung gezeigte Baufeld weist ein Pulverbett der erfindungsgemäßen Zusammensetzung 3 auf. An das Baufeld angrenzend sind Bevorratungseinrichtungen 7 zur Aufnahme und Abgabe der Zusammensetzung 3 vorgesehen. Gemäß der in der Figurendarstellung dargestellten Ausführungsform sind die Bevorratungseinrichtungen 7 mit in z-Richtung, insbesondere entlang einer z-Achse, beweglichen Kolben versehen, so dass durch Bewegung des Kolbens in z-Richtung entweder ein Raum in der Bevorratungseinrichtung 7 zur Aufnahme der Zusammensetzung 3 geschaffen wird oder die Zusammensetzung 3 aus der Bevorratungseinrichtung 7 hinausgedrückt wird, insbesondere in den Bereich des Baufeldes.

Die Zusammensetzung 3 wird nach Abgabe aus der Bevorratungseinrichtung 7 durch eine Verteilungseinrichtung 8 in einer homogenen gleichmäßigen Schicht auf dem Baufeld verteilt, wobei überschüssiges Pulver der Zusammensetzung 3 stets in einer gegenüberliegenden Bevorratungseinrichtung 7 aufgenommen werden kann. Die Verteilungseinrichtung 8 ist in der Figurendarstellung beispielhaft in Form eines Rollers dargestellt.

Die Vorrichtung 1 weist ferner Mittel 9 zur Erzeugung von Laserstrahlen auf, in welcher die Laserstrahlen 4 erzeugt werden. Die Laserstrahlen 4 können über ein Ablenkmittel 10, insbesondere mindestens eine Spiegelanordnung, auf das Baufeld abgelenkt werden, so dass dort die dreidimensionale Struktur 5 erhalten wird.

Bei der Durchführung des erfindungsgemäßen Verfahrens wird nunmehr eine dünne Schicht der Zusammensetzung 3 auf dem Baufeld vorgelegt und anschließend durch selektive ortsaufgelöste Einstrahlung von Laserstrahlen 4 der in dem Mittel zur Erzeugung von Laserstrahlen 9 erzeugten und über das Ablenkmittel 10 abgelenkten Laserstrahlen 4 versintert, so dass eine Lage eines duroplastischen Materials erhalten wird.

Anschließend wird der Baufeldbereich mit Hilfe des Kolbens 6 zumindest geringfügig abgesenkt und weitere Zusammensetzung 3 aus einer Bevorratungseinrichtung 7 abgegeben, welche mit der Verteilungseinrichtung 8 in Form einer dünnen Schicht auf dem Baufeld homogen verteilt wird. Hierdurch wird eine neue Lage der Zusammensetzung 3 gebildet, welche anschließend bestrahlt werden kann. Überschüssige Zusammensetzung 3 wird in der gegenüberliegenden Bevorratungseinrichtung 7 wieder aufgenommen.

Im Anschluss wird durch die Laserstrahlen 4 die Schicht ortsselektiv versintert, wobei eine neue Lage eines duroplastischen Materials entsteht, welche nicht nur innerhalb dieser Lage vernetzt ist, sondern auch mit der darunterliegenden Lage des duroplastischen Materials. Durch Wiederholung dieser Verfahrensschritte wird schließlich die dreidimensionale Struktur 5 aufgebaut.

Nach Fertigstellung der dreidimensionalen Struktur 5 kann diese bei Bedarf getempert werden.

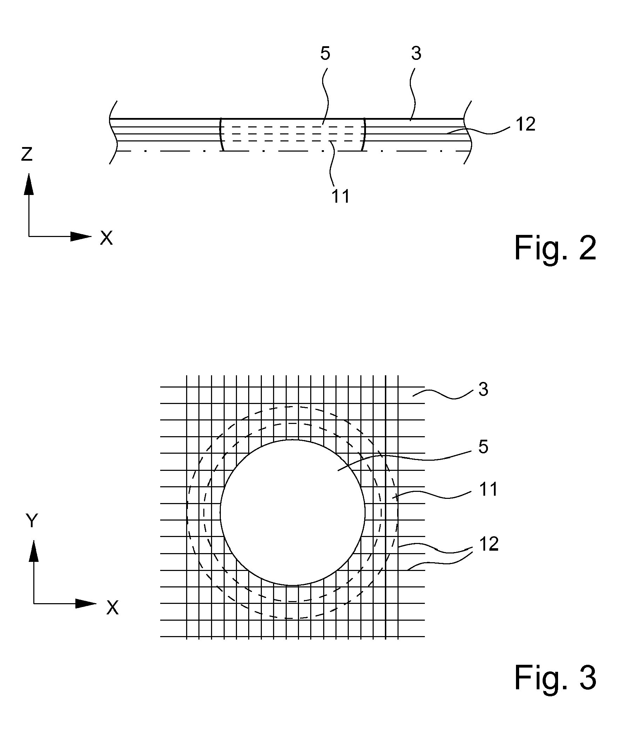

In Fig. 2 ist ein vergrößerter Ausschnitt des Baufeldes dargestellt, insbesondere sind in Fig. 2 die verschiedenen Lagen 11 des duroplastischen Materials dargestellt, aus welchen die dreidimensionale Struktur 5 besteht. Die Darstellung der einzelnen Lagen 11 erfolgt nur zur Verdeutlichung der vorliegenden Erfindung, an der dreidimensionalen Struktur 5 sind diese einzelnen Lagen üblicherweise nicht erkennbar, da die Vernetzung des durch die Versinterung erhaltenen duroplastischen Materials nicht nur innerhalb einer Lage 11, sondern auch zwischen Lagen 11 stattfindet.

In Fig. 2 ist gleichfalls ein Hilfsgitter durch die Gitternetzlinien 12 dargestellt. Die Gitternetzlinien 12 des Hilfsgitters werden durch eine Vorvernetzung erzeugt, wobei vor dem eigentlichen Sintervorgang zur Erzeugung des duroplastischen Materials eine ortsaufgelöste und lokal streng begrenzte Bestrahlung der Zusammensetzung 3 mit den Laserstrahlen 4 bei geringerer Intensität erfolgt, so dass die Bildungsreaktion des Duroplasten nicht gestartet wird, sondern allein ein thermoplastisches Auf- und Verschmelzen thermoplastischer Anteile der Zusammensetzung stattfindet. Die Gitternetzlinien 12 aus vorvernetztem Material werden nach Fertigstellung der dreidimensionalen Struktur 5 vorzugsweise mechanisch wieder entfernt.

Fig. 3 zeigt den Ausschnitt gemäß Fig. 2 in einer zur xz-Ebene senkrecht stehenden xy-Ebene. Insbesondere zeigt die Fig. 3 eine teilweise fertiggestellte dreidimensionale Struktur 5, welche in eine Zusammensetzung 3 eingebettet ist. Das Hilfsgitter zur Erzeugung der dreidimensionalen Struktur wird durch die Gitternetzlinie 12 gebildet. Die einzelnen Lagen 11 der dreidimensionalen Struktur 5 sind durch gestrichelte Höhenlinien dargestellt.

Der Gegenstand der vorliegenden Erfindung wird nachfolgend weiterführend in nicht beschränkender Weise durch die Ausführungsbeispiele verdeutlicht.

### Ausführungsbeispiele:

Für die folgenden Untersuchungen wurde die in Tabelle 1 aufgeführte pulverförmige Zusammensetzung verwendet.

**Tabelle 1**

| **Komponente** | **Gew**.-% |
|---|---|
| Polyesterharz¹ | 70 |
| Glycidester | 5 |
| Thermoplastisches Polyamid | 15 |
| Verlaufmittel | 3 |
| Titandioxid | 5 |
| Benzoin | 0,3 |
| Polyethylen-Wachs | 1,5 |
| Aluminiumoxid | 0,2 |

| | |
|---|---|
| ¹: saures Polyesterharz mit einem Molekulargewicht M_{w} von 5.500 g/mol und einer Säurezahl von 31 mg KOH/g | |

Das Pulver weist eine Dichte von 1,2 g/cm³ und Partikelgrößen im Bereich von 10 bis 63 µm mit einer Partikelgröße D60 von 32 µm auf.

Mit den zuvor genannten Zusammensetzungen werden Testkörper, sogenannte Testteile hergestellt, um die Eignung der Zusammensetzungen zur Herstellung dreidimensionaler Strukturen durch Lasersintern zu kontrollieren. Hierzu wird das Pulver in einer Vorrichtung zur selektiven Lasersinterung vorgelegt und Lage für Lage aus dem Pulvermaterial durch Einwirkung von Laserstrahlung erzeugt. Für den Energieeintrag wird ein CO₂-Laser verwendet.

Die Stärke der jeweiligen Pulverlagen beträgt 0,08 mm, so dass für die Testteile aus etwa 125 Lagen eine 10 mm Bauteilstärke resultiert.

Zur Herstellung der Testteile wird eine vorvernetzte Stützstruktur verwendet. Die Stützstruktur wurde in jeder Pulverlage als Raster mit einem Linienabstand von 1,0 mm erzeugt, wobei die Bestrahlung des Baufeldes einmal in x-Richtung und einmal in γ-Richtung des Baufeldes durchgeführt wird, so dass eine Doppelbelichtung jeder Schicht erfolgt. Für die Stützstruktur wird eine Laserleistung von 35 W eingestellt.

Nachdem die Stützstruktur einer Pulverlage erzeugt wurde, wird die Pulverlage zur Initiierung der chemischen Vernetzung mit einer Leistung von 43 W und einem Linienabstand von 0,15 mm einfach bestrahlt. Die äußeren Konturen des Testteils werden jeweils noch einmal mit einer Leistung von 12 W nachbelichtet. Die Belichtungsgeschwindigkeit der Anlage beträgt 15 m/s für das Füllen der Bauteilbereiche und 3,8 m/s für die Konturen. Insgesamt werden die Testteile mit einer Gesamtbelichtungsdauer von 7 min hergestellt.

Nach dem Lasersintern werden die Testteile mechanisch von der Stützstruktur befreit und bei 120°C in einem Glasperlenbad getempert.

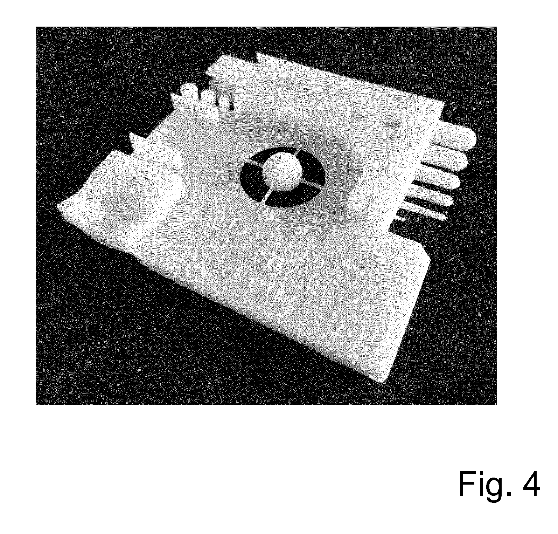

Das fertige Testteil ist in Fig. 4 dargestellt. Gut zu erkennen ist die hohe Konturschärfe des Bauteils, welche zeigt, dass mit dem erfindungsgemäßen Verfahren duroplastische Strukturen, insbesondere Gegenstände, mit hoher Detailgenauigkeit und Konturschärfe erzeugt werden können.

### Bezugszeichenliste:

- 1: Vorrichtung
- 2: Baufelderstreckung
- 3: Zusammensetzung
- 4: Laserstrahlen
- 5: Struktur
- 6: Kolben
- 7: Bevorratungseinrichtung
- 8: Verteilungsrichtung
- 9: Mittel zur Erzeugung von Laserstrahlen
- 10: Ablenkmittel
- 11: Lage
- 12: Gitternetzlinie

## Patentansprüche

1. Verfahren zur Herstellung dreidimensionaler Strukturen, insbesondere eines dreidimensionalen Gegenstandes, auf Basis duroplastischer Materialien,
**dadurch gekennzeichnet,**
**dass**
(a) in einem ersten Verfahrensschritt mindestens eine pulverförmige Zusammensetzung, enthaltend mindestens eine reaktive Komponente, bereitgestellt wird, und
(b) in einem nachfolgenden Verfahrensschritt die reaktive Komponente durch Eintragung von Energie zur Reaktion gebracht, insbesondere vernetzt, wird.

2. Verfahren nach Anspruch 1, **dadurch gekennzeichnet, dass** die reaktive Komponente ausgewählt ist aus reaktiven Monomeren, reaktiven Oligomeren, reaktiven Polymeren und deren Mischungen.

3. Verfahren nach Anspruch 1 oder 2, **dadurch gekennzeichnet, dass** die Zusammensetzung in Form eines rieselfähigen Pulvers bereitgestellt wird und/oder dass die Zusammensetzung in Form eines Pulverbetts bereitgestellt wird.

4. Verfahren nach einem der vorangehenden Ansprüche, **dadurch gekennzeichnet,**
**dass** der Energieeintrag mittels elektromagnetischer Strahlung erfolgt und/oder
**dass** das Verfahren ein Lasersinterverfahren, insbesondere ein Verfahren zur selektiven Lasersinterung, ist und/oder
**dass** der Energieeintrag örtlich und zeitlich begrenzt, insbesondere regioselektiv, durchgeführt wird.

5. Verfahren nach einem der vorangehenden Ansprüche, **dadurch gekennzeichnet, dass** durch die Verfahrensschritte (a) und (b) eine Lage eines dreidimensionalen Gegenstandes erzeugt wird, insbesondere wobei die Lage eine Schichtstärke im Bereich von 0,005 bis 1 mm, insbesondere 0,01 bis 0,8 mm, vorzugsweise 0,02 bis 0,5 mm, bevorzugt 0,02 bis 0,20 mm, besonders bevorzugt 0,04 bis 0,15 mm, ganz besonders bevorzugt 0,06 bis 0,12 mm, aufweist.

6. Verfahren nach einem der vorangehenden Ansprüche, **dadurch gekennzeichnet, dass** die Verfahrensschritte (a) und (b) wiederholt werden, um eine dreidimensionale Struktur, insbesondere einen dreidimensionalen Gegenstand, zu erhalten.

7. Verfahren nach einem der vorangehenden Ansprüche, **dadurch gekennzeichnet,**
**dass** Verfahrensschritt (b) in einer Schutzgasatmosphäre und/oder unter Unterdruck durchgeführt wird und/oder
**dass** Verfahrensschritt (b) bei Temperaturen unterhalb von 60 °C, insbesondere 50 °C, vorzugsweise 40 °C, durchgeführt wird und/oder dass Verfahrensschritt (b) bei Temperaturen im Bereich von 10 bis 60 °C, insbesondere 20 bis 50 °C, vorzugsweise 30 bis 40 °C, durchgeführt wird.

8. Verfahren zur Herstellung dreidimensionaler Strukturen, insbesondere eines dreidimensionalen Gegenstandes, auf Basis duroplastischer Materialien, nach einem der vorangehenden Ansprüche, **dadurch gekennzeichnet,**
**dass**
(a) in einem ersten Verfahrensschritt mindestens eine reaktive Komponente bereitgestellt wird,
(b) in einem nachfolgenden Verfahrensschritt die reaktive Komponente durch Eintragung von Energie zur Reaktion gebracht, insbesondere vernetzt, wird und
(c) in einem wiederum nachfolgenden Verfahrensschritt die dreidimensionale Struktur getempert wird.

9. Verfahren nach einem der vorangehenden Ansprüche, **dadurch gekennzeichnet, dass** nach Verfahrensschritt (a) und vor Verfahrensschritt (b) eine Vorvernetzung der Zusammensetzung durchgeführt wird.

10. Verfahren zur Herstellung dreidimensionaler Strukturen, insbesondere eines dreidimensionalen Gegenstandes, auf Basis duroplastischer Materialien nach einem der vorangehenden Ansprüche, **dadurch gekennzeichnet, dass**
(B) in einem ersten Verfahrensschritt mindestens eine Zusammensetzung, enthaltend mindestens eine reaktive Komponente, bereitgestellt wird, insbesondere in Form einer Ebene bereitgestellt wird,
(B) in einem nachfolgenden Verfahrensschritt eine Vorvernetzung der Zusammensetzung durchgeführt wird und
(C) in einem wiederum nachfolgenden Verfahrensschritt die reaktive Komponente durch Eintragung von Energie zur Reaktion gebracht, insbesondere vernetzt, wird.

11. Verfahren nach Anspruch 9 oder 10, **dadurch gekennzeichnet,**
**dass** die Vorvernetzung lokal und/oder zeitlich begrenzt, insbesondere regioselektiv, durchgeführt wird und/oder
**dass** durch die Vorvernetzung vorvernetzte Bereiche, insbesondere in Form von Flächen und/oder Linien, bevorzugt Gitterlinien, vorzugsweise ein Gitternetz, in der Zusammensetzung erzeugt werden und/oder dass durch die Vorvernetzung eine Stützstruktur geschaffen wird.

12. Vorrichtung (1) zur Herstellung dreidimensionaler duroplastischer Strukturen aus pulverförmigen Zusammensetzungen durch selektive Eintragung von Energie, insbesondere mittels Lasersinterns,
**dadurch gekennzeichnet,**
**dass** die Vorrichtung (1)
(a) ein in einer Raumrichtung, insbesondere entlang einer z-Achse, insbesondere zumindest bereichsweise bewegbares Baufeld zur Bereitstellung einer pulverförmigen Zusammensetzung (3),
(b) mindestens eine Bevorratungseinrichtung (7) zur Aufnahme und Abgabe der pulverförmigen Zusammensetzung,
(c) eine Verteilungseinrichtung (8) zur Verteilung der pulverförmigen Zusammensetzung auf dem Baufeld und
(d) mindestens eine Einrichtung zur Erzeugung von elektromagnetischer Strahlung und/oder zur Einstrahlung von elektromagnetischer Strahlung auf das Baufeld,
aufweist.

13. Verwendung einer Vorrichtung nach Anspruch 12 zur Herstellung dreidimensionaler duroplastischer Strukturen aus pulverförmigen Zusammensetzungen durch selektive Eintragung von Energie, insbesondere mittels Lasersinterns.

14. Zusammensetzung zur Herstellung einer dreidimensionalen duroplastischen Struktur, vorzugsweise eines Gegenstands, insbesondere nach einem der vorangehenden Ansprüche, durch Energieeintrag, insbesondere mittels Laserstrahlung,
**dadurch gekennzeichnet,**
**dass** die Zusammensetzung in Form eines Pulvers, insbesondere eines rieselfähigen Pulvers, vorliegt.

15. Zusammensetzung nach Anspruch 14, **dadurch gekennzeichnet, dass** das Pulver Partikel mit Partikelgrößen im Bereich von 1 bis 200 µm, insbesondere 5 bis 150 µm, vorzugsweise 8 bis 100 µm, bevorzugt 10 bis 80 µm, besonders bevorzugt 10 bis 65 µm, aufweist.

16. Zusammensetzung nach Anspruch 14 oder 15, **dadurch gekennzeichnet, dass** die Zusammensetzung mindestens eine reaktive Komponente aufweist, insbesondere wobei die reaktive Komponente ausgewählt ist aus reaktiven Monomeren, reaktiven Oligomeren und reaktiven Polymeren sowie deren Mischungen, vorzugsweise reaktiven Oligomeren und reaktiven Polymeren sowie deren Mischungen.

17. Zusammensetzung nach Anspruch 16, **dadurch gekennzeichnet,**
**dass** die reaktive Komponente ausgewählt ist aus Polyestern, Polyurethanen, Polyacrylaten, Polyepoxiden und deren Mischungen und/oder
**dass** die Zusammensetzung die reaktive Komponente in Mengen von 50 bis 99 Gew.-%, insbesondere 60 bis 95 Gew.-%, vorzugsweise 65 bis 90 Gew.-%, bezogen auf die Zusammensetzung, aufweist und/oder dass die reaktive Komponente einen Erweichungspunkt im Bereich von 70 bis 150 °C, insbesondere von 80 bis 140 °C, bevorzugt von 90 bis 130 °C, aufweist.

18. Zusammensetzung nach einem der vorangehenden Ansprüche, **dadurch gekennzeichnet, dass** die Zusammensetzung mindestens einen Vernetzer aufweist, insbesondere wobei die Zusammensetzung den Vernetzer in Mengen von 0,1 bis 20 Gew.-%, insbesondere 1 bis 15 Gew.-%, vorzugsweise 3 bis 10 Gew.-%, bevorzugt 4 bis 7 Gew.-%, bezogen auf die Zusammensetzung, aufweist,
insbesondere wobei die Zusammensetzung ein Verhältnis der Anzahl der reaktiven Gruppen der reaktiven Komponente zur Anzahl der reaktiven Gruppen des Vernetzers im Bereich von 1,5 : 1 bis 1 : 2, insbesondere 1 : 1 bis 1 : 1,5, vorzugsweise 1 : 1,1 bis 1 : 1,4, bevorzugt 1 : 1,15 bis 1 : 1,25, aufweist und/oder

19. Zusammensetzung nach einem der vorangehenden Ansprüche, **dadurch gekennzeichnet, dass** die Zusammensetzung umfasst:
(a) mindestens eine reaktive Komponente in Mengen von 50 bis 99 Gew.-%, bezogen auf die Zusammensetzung,
(b) mindestens einen Vernetzer in Mengen von 0,1 bis 20 Gew.-%, bezogen auf die Zusammensetzung,
(c) mindestens eine nichtreaktive thermoplastische Komponente in Mengen von 5 bis 50 Gew.-%,
(d) mindestens einen Füllstoff und/oder ein Pigment in Mengen von 0,1 bis 25 Gew.-%,
(e) mindestens ein Verlaufmittel in Mengen von 0,1 bis 10 Gew.-%, bezogen auf die Zusammensetzung, und
(f) mindestens ein Additiv in Mengen von 0,1 bis 15 Gew.-%, bezogen auf die Zusammensetzung.

20. Verwendung einer Zusammensetzung nach einem der Ansprüche 14 bis 19 zur Herstellung einer dreidimensionalen duroplastischen Struktur, vorzugsweise eines Gegenstands, durch selektive Einbringung von Energie, insbesondere mittels Laserstrahlung.
